(19) Europäisches Patentamt
European Patent Office
Office européen des brevets

(11) **EP 2 926 515 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(21) Anmeldenummer: **13801497.2**

(22) Anmeldetag: **25.11.2013**

(51) Int Cl.:
***H04L 27/14*** *(2006.01)*

(86) Internationale Anmeldenummer:
**PCT/EP2013/074548**

(87) Internationale Veröffentlichungsnummer:
**WO 2014/082946 (05.06.2014 Gazette 2014/23)**

(54) **VORRICHTUNG UND VERFAHREN ZUR DETEKTION VON FSK-MODULIERTEN DATENSEQUENZEN**

DEVICE AND METHOD FOR FSK SEQUENCE DETECTION

DISPOSITIF ET PROCÉDÉ POUR LA DÉTECTION DE SÉQUENCES DE DONNÉES MODULÉES PAR UN MODULATEUR DE TYPE FSK

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2012 DE 102012221798**

(43) Veröffentlichungstag der Anmeldung:
**07.10.2015 Patentblatt 2015/41**

(73) Patentinhaber: **Fraunhofer-Gesellschaft zur Förderung der angewandten Forschung e.V.
80686 München (DE)**

(72) Erfinder:
• **KUBA, Matthias
90419 Nürnberg (DE)**

• **KLATT, Matthias
90480 Nürnberg (DE)**

(74) Vertreter: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) Entgegenhaltungen:
**US-A- 5 701 332**

• **SCHAUB T: "SPREAD FREQUENCY SHIFT KEYING", IEEE TRANSACTIONS ON COMMUNICATIONS, IEEE SERVICE CENTER, PISCATAWAY, NJ. USA, Bd. 42, Nr. 2/03/04, 1. Februar 1994 (1994-02-01), Seiten 1056-1064, XP000447354, ISSN: 0090-6778, DOI: 10.1109/TCOMM.1994.580214**

**Beschreibung**

Die vorliegende Erfindung betrifft Frequenzumtastung und, im Besonderen, eine Vorrichtung und ein Verfahren zur Sequenzerkennung frequenzumgetasteter Signale.

Frequenzumtastung wird z.B. in der Nachrichtentechnik zur Kodierung von Nachrichten und Adressen eingesetzt. In diesem Zusammenhang wird Frequenzumtastung immer wichtiger.

Die Übertragung von Daten mittels Frequenzumtastung erfolgt gemäß einer Modulations-vorschrift. So wird zum Beispiel bei binärer Frequenzumtastung (engl. Binary Frequency Shift Keying, BFSK) gemäß dem Stand der Technik vom Sender ein sinusförmiges Signal der Frequenz $f_0$ ausgesendet, wenn ein Logikwert "0" vorliegt, bzw. ein sinusförmiges Signal der Frequenz $f_1$ ausgesendet, wenn ein Logikwert "1" vorliegt. $f_0$ kann dabei als eine erste Kodierfrequenz angesehen werden; $f_1$ kann dabei als eine zweite Kodierfrequenz angesehen werden. Dabei haben $f_0$ und $f_1$ unterschiedliche Werte: $f_0 \neq f_1$. Liegt ein Logikwert "0" vor, so wird vom Sender ein Signal

$$s_0(t) = A\cos\left(2\pi f_0 t + \theta_0\right) \qquad (1)$$

für die Bitdauer $T_b$ ausgesendet, bei einem Logikwert "1" dagegen das Signal

$$s_1(t) = A\cos\left(2\pi f_1 t + \theta_1\right) \qquad (2)$$

mit den Phasenlangen der beiden Signale $\theta_0$ und $\theta_1$, die im Allgemeinen voneinander verschieden sind, sowie der Amplitude A, wie beispielsweise in

[1] F. Xiong, Digital Modulation Techniques, Artech House, Inc., zweite Auflage, 2006,
beschrieben. Anhand der Frequenz kann der Empfänger dann aus dem empfangenen Signal ableiten, ob vom Sender ein Logikwert "0" oder "1" gesendet wurde.
Eine spezielle Variante von FSK Empfängern sind Spread Frequency Shift Keying (SFSK) Empfänger (Spread Frequency Shift Keying = deutsch: Frequenzumtastung im Bandspreizverfahren). Zu SFSK-Empfängern, siehe insbesondere:

[2] T. Schaub, Spread Frequency Shift Keying, IEEE Transactions on Communications, Feb. 1994, Ausgabe 42, Nummer 234, Seiten 1056 - 1064).

Ein weiterer FSK-Empfänger ist aus der Patentschrift US5701332A (DECROUEZ CHRISTELLE [FR]) bekannt.

In konventionellen FSK-Empfängern, unabhängig davon, ob diese über Kenntnis der Phasenlagen verfügen (kohärenter FSK-Empfänger) oder nicht (inkohärenter FSK-Empfänger), wird anhand eines Schwellwertvergleichs entschieden, welcher Logikwert von einem Sender gesendet wurde. Ist im Zeitraum $T_b$ mehr Signalenergie nahe der Frequenz $f_0$ vorhanden, so entscheidet sich der Empfänger für den Logikwert "0"; ist hingegen mehr Signalenergie nahe $f_1$ vorhanden, so entscheidet sich der Empfänger für den Logikwert "1".

Wird vom Sender eine von M bekannten Sequenzen mit einer Länge von $N_S$ zeitlich aufeinanderfolgenden und FSK-modulierten Logikwerten übermittelt, so versucht ein konventioneller Empfänger die vom Sender gesendete Sequenz dadurch zu ermitteln, dass er die aus dem empfangenen Signal nach dem oben beschriebenen Prinzip ermittelte Logiksequenz mit allen M bekannten Sequenzen vergleicht und jene Sequenz wählt, für die die Ähnlichkeit mit der empfangenen Sequenz am größten ist. Dies geschieht im Allgemeinen durch Berechnung der Korrelationskoeffizienten (oder dieser Größe proportionalen Größen) zwischen der empfangenen Sequenz und allen *M* bekannten Sequenzen. Geht man von *M* möglichen, dem Sender und Empfänger bekannten Sequenzen **R**$_i$ der Länge $N_S$ aus, so lässt sich die Entscheidung des Empfängers, ausgehend von der empfangenen Sequenz **S** der Länge $N_S$ für eine der *M* Referenzsequenzen wie folgt ausdrücken:

$$\delta = \arg\max_i\left(\sum_{j=1}^{N_S}\mathbf{R}_{ij}\mathbf{S}_j\right), \quad i = 1,2,..,M\,. \qquad (3)$$

Der Empfänger berechnet also für jede der *M* Referenzsequenzen $\mathbf{R}_i$ die Korrelation mit der empfangenen Sequenz $\mathbf{S}$ und entscheidet sich anschließend für jene Sequenz $\mathbf{R}_i$, mit $i = \delta$, aus $\mathbf{R},$ für die der Wert der Korrelation am größten ist. $\mathbf{R}$ beschreibt hierbei eine Tabelle aller *M* Referenzsequenzen $\mathbf{R}_i$ und $\mathbf{R}_{ij}$ beschreibt das j-te Element aus $\mathbf{R}_i$. Ist die vom Sender gesendete Sequenz $\mathbf{S}$, so hat der Empfänger die richtige Entscheidung getroffen falls $\mathbf{R}_\delta = \mathbf{S}$, ansonsten hat der Empfänger die falsche Entscheidung getroffen.

Die hier beschriebene Vorgehensweise konventioneller Empfänger ist insbesondere dann nachteilig, wenn die Übertragungseigenschaften des Gesamtsystems, bestehend aus Sender, Übertragungskanal und Empfänger, keine konstante Funktion der Frequenz darstellen.

Aufgabe der vorliegenden Erfindung ist die Bereitstellung verbesserter Konzepte zur Sequenzerkennung für Frequenzumtastung. Sowohl bei von der Frequenz unabhängigem wie auch bei frequenzselektivem Übertragungsverhalten sollen bei der Sequenzerkennung mit hoher Wahrscheinlichkeit korrekte Entscheidungen getroffen werden, ohne dass der Empfänger über Kenntnis des Übertragungsverhaltens und über Kenntnis über die Phasenlagen der empfangenen Signale verfügen muss. Die Aufgabe der vorliegenden Erfindung wird durch eine Vorrichtung nach Anspruch 1, durch ein Verfahren nach Anspruch 14 und durch ein Computerprogramm nach Anspruch 15 gelöst.

Eine Vorrichtung zur Ermittlung einer kodierten Datensequenz als eine ermittelte Datensequenz wird bereitgestellt. Die kodierte Datensequenz ist durch ein gemäß einer Modulationsvorschrift frequenzmoduliertes Eingangssignal kodiert. Die kodierte Datensequenz umfasst eine Mehrzahl von Datenelementen.

Die Vorrichtung umfasst die in Anspruch 1 angegebenen Merkmale. Weitere, bevorzugte Ausführungsformen der Vorrichtung finden sich in den abhängigen Ansprüchen 1-13.

Ausführungsformen der Erfindung basieren darauf, dass zur Erkennung von frequenzumgetasteten Sequenzen (Bitfolgen) ausgehend von unterschiedlichen Referenzsequenzen Schätzwerte für den Signal-Rauschabstand des empfangenen Signals berechnet und die Entscheidung für eine bestimmte Sequenz anhand einer Maximalwertentscheidung getroffen werden.

Sowohl bei von der Frequenz unabhängigem wie auch bei frequenzselektivem Übertragungsverhalten werden mit hoher Wahrscheinlichkeit korrekte Entscheidungen getroffen, ohne dass der Empfänger über Kenntnis des Übertragungsverhaltens verfügen muss. Daneben ist es für den Empfänger auch nicht notwendig, über Kenntnis der Phasenlagen der empfangenen Signale zu verfügen.

Die erfindungsgemäßen Konzepte ermöglichen, dass ein Empfänger zur Erkennung einer frequenzumgetasteten Sequenz ausgehend von einer endlichen Anzahl zur Verfügung stehender Sequenzen Schätzwerte für den Signal-Rauschabstand in sämtlichen Frequenzkanälen berechnet und die Entscheidung anhand des maximalen Schätzwertes trifft.

Der Einsatz der erfindungsgemäßen Konzepte ist vorzugsweise in Systemen mit Frequenzumtastung möglich, bei denen die Übertragungseigenschaften der modulierten Signale entweder eine konstante Funktion der Frequenz darstellen oder für unterschiedliche Frequenzen unterschiedliches Störungs- und Dämpfungsverhalten aufweisen, diese Eigenschaften dem Empfänger jedoch nicht bekannt sind. Durch das erfindungsgemäße Verfahren ist ein Empfänger in der Lage, die vom Sender übermittelte Sequenz aus einer endlichen Anzahl zur Verfügung stehender Sequenzen ohne Kenntnis der Übertragungseigen-schaften mit hoher Wahrscheinlichkeit richtig zu erkennen.

Besondere Vorteile ergeben sich bei der Verwendung mit Spread Frequency Shift Keying (SFSK) Empfängern. Sofern die erfindungsgemäßen Konzepte zur Empfängeradressierung verwendet und mit einem, z.B. nachgeschalteten, sogenannten Spread Frequency Shift Keying Empfänger ausgestattet wird, kann zudem auf das von einem SFSK-Empfänger benötigte Kanalschätzverfahren verzichtet werden, da sich die Ergebnisse dieses Schätzverfahrens mit Hilfe des erfindungsgemäßen Verfahrens direkt aus der Empfängeradressierung ergeben.

Der Einfachheit halber wird im Rahmen der Ausführungsbeispiele insbesondere auf die Anwendung des erfindungsgemäßen Verfahrens auf binäre Frequenzumtastung eingegangen. Eine Beschreibung zur Erweiterung des erfindungsgemäßen Sequenzerkennungsverfahrens auf höherwertige Frequenzumtastung findet sich weiter unten. In einer besonders vorteilhaften Ausführungsform der Erfindung ist das erfindungsgemäße Verfahren für Übertragungskanäle einzusetzen, deren Übertragungseigenschaften keine konstante Funktion der Frequenz darstellen und dem Empfänger die Übertragungseigenschaften nicht bekannt sind.

Es ist begrifflich zu unterscheiden:

Ein Datenwert ist einer der möglichen Werte den ein Datenelement einer Datensequenz annehmen kann. Handelt es sich zum Beispiel um eine binäre Datensequenz, so sind "0" und "1" die Datenwerte, die ein Datenelement annehmen kann. Mögliche Datenwerte der Datenelemente einer Datensequenz können aber auch zum Beispiel die Werte "0", "1", "2", "3" oder die Zahlen von "0" bis "15" sein. Datenwerte müssen keine Zahlen sein, sondern können zum Beispiel auch Buchstaben sein. So kann beispielsweise eine Datensequenz Datenelemente aufweisen, die einen der Datenwerte "A", "B", "C" oder "D" annehmen können". Datenwerte können aber auch zum Beispiel Zeichenketten sein, wie etwa die Zeichenketten "LOW", "AVERAGE", und "HIGH". Jedes Datenelement der Datensequenz würde dann einen der Datenwerte "LOW", "AVERAGE" oder "HIGH" annehmen. Wird im Folgenden auch von einem "Logikwert 0" oder "Logikwert 1" gesprochen, so ist damit der Datenwert 0 oder der Datenwert 1 gemeint.

Vom Begriff des Datenwerts sind die Begriffe Datensequenz und Datenelement zu unterscheiden. Eine Datensequenz umfasst eine Anzahl von Datenelementen. So kann eine Datensequenz zum Beispiel genau vier Datenelemente umfassen, nämlich ein erstes Datenelement an erster Position in der Datensequenz, ein zweites Datenelement an zweiter Position in der Datensequenz, ein drittes Datenelement an dritter Position in der Datensequenz und ein viertes Datenelement an vierter Position in der Datensequenz. Jedes der vier Datenelemente der Datensequenz nimmt dann genau einen Datenwert an.

Oder kurz: Eine Datensequenz weist eine Anzahl von Datenelementen auf. Jedes der Datenelemente nimmt einen von mehreren möglichen Datenwerten an.

Im Folgenden werden Ausführungsbeispiele unter Bezugnahme auf die Zeichnungen erläutert, wobei

Fig. 1    eine Vorrichtung zur Ermittlung einer durch ein frequenzmoduliertes Eingangssignal kodierten Datensequenz, die eine Mehrzahl von Datenelementen umfasst, als eine ermittelte Datensequenz gemäß einer Ausführungsform zeigt,

Fig. 2    eine Vorrichtung zur Ermittlung einer durch ein frequenzmoduliertes Eingangssignal kodierten Datensequenz gemäß einer weiteren Ausführungsform zeigt,

Fig. 3    zwei frequenzgefilterte Kanalsignale gemäß einer Ausführungsform zeigt,

Fig. 4    ein Ausführungsbeispiel zeigt, bei dem ein Netzwerk mit 5 Kommunikationsknoten dargestellt ist, die sich dasselbe Übertragungsmedium teilen,

Fig. 5    eine Vorrichtung zur Erkennung einer Netzwerkadresse gemäß einer Ausführungsform zeigt, die durch ein frequenzmoduliertes Eingangssignal kodiert ist, und

Fig. 6    eine Vorrichtung zur Ermittlung einer durch ein frequenzmoduliertes Eingangssignal kodierten Datensequenz gemäß einer Ausführungsform zeigt, die eine Kanalschätzungs-Ausgabeeinheit aufweist.

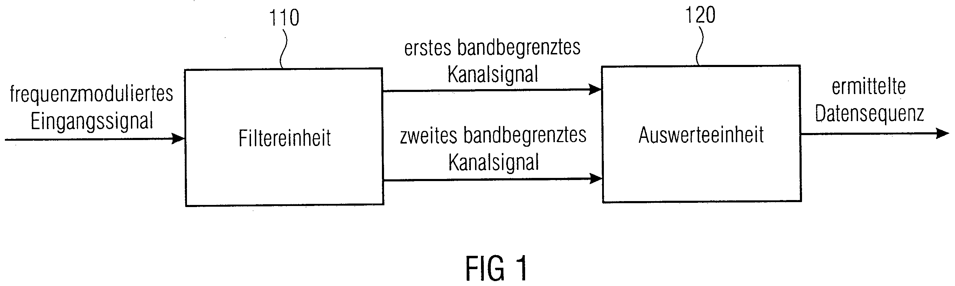

Fig. 1 zeigt eine Vorrichtung zur Ermittlung einer kodierten Datensequenz als eine ermittelte Datensequenz. Die kodierte Datensequenz ist durch ein gemäß einer Modulationsvorschrift frequenzmoduliertes Eingangssignal kodiert. Die kodierte Datensequenz umfasst eine Mehrzahl von Datenelementen.

Die Vorrichtung umfasst eine Filtereinheit 110 zum Filtern des frequenzmodulierten Eingangssignals, um ein erstes frequenzgefiltertes Kanalsignal und ein zweites frequenzgefiltertes Kanalsignal zu erhalten.

Ferner umfasst die Vorrichtung eine Auswerteeinheit 120, die dafür eingerichtet ist, für jede bekannte Datensequenz einer Menge bekannter Datensequenzen zwei kanalspezifische Signal-Rauschabstandswerte dieser bekannten Datensequenz zuzuordnen.

Die Auswerteeinheit 120 ist dafür eingerichtet, für jede bekannte Datensequenz der Menge bekannter Datensequenzen einen ersten der zwei kanalspezifischen Signal-Rauschabstandswerte, die dieser Datensequenz zugeordnet sind, basierend auf dieser bekannten Datensequenz und basierend auf dem ersten frequenzgefilterten Kanalsignal als einen ersten kanalspezifischen Signal-Rauschabstandswert dieser bekannten Datensequenz zu bestimmen.

Ferner ist die Auswerteeinheit 120 dafür eingerichtet, für jede bekannte Datensequenz der Menge bekannter Datensequenzen einen zweiten der zwei kanalspezifischen Signal-Rauschabstandswerte, die dieser Datensequenz zugeordnet sind, basierend auf dieser bekannten Datensequenz und basierend auf dem zweiten frequenzgefilterten Kanalsignal als einen zweiten kanalspezifischen Signal-Rauschabstandswert dieser bekannten Datensequenz zu bestimmen.

Des Weiteren ist die Auswerteeinheit 120 ausgebildet, eine bekannte Datensequenz aus der Menge der bekannten Datensequenzen als die ermittelte Datensequenz auszuwählen, der ein kanalspezifischer Signal-Rauschabstandswert zugeordnet ist, der größer ist als ein anderer kanalspezifischer Signal-Rauschabstandswert, der einer anderen der bekannten Datensequenzen zugeordnet ist.

Begrifflich wird also unterschieden:

Die kodierte Datensequenz ist diejenige Datensequenz, die tatsächlich im frequenzmodulierten Eingangssignal kodiert ist.

Die Menge der bekannten Datensequenzen, ist die Menge all derjenigen Datensequenzen, die in dem frequenzmodulierten Eingangssignal grundsätzlich vorliegen könnten. Umfasst die Datensequenz zum Beispiel 4 Datenelemente und weisen die Datenelemente keine anderen Datenwerte als die binären Datenwerte 0 oder 1 auf, so muss die Menge der bekannten Datensequenzen nicht zwingend alle 16 verschiedenen Kombinationen von Nullen und Einsen enthalten. Vielmehr ist bevorzugt, dass vereinbart ist, dass manche Datensequenzen, z.B. "0000" und "1111" nicht im frequenzmodulierten Eingangssignal kodiert werden, die dann auch nicht zur Menge der bekannten Datensequenzen gehören.

Die ermittelte Datensequenz ist diejenige Datensequenz aus der Menge der bekannten Datensequenzen, die die Vorrichtung als diejenige Datensequenz identifiziert hat, die im frequenzmodulierten Eingangssignal kodiert sei. Es handelt sich also um die Datensequenz, von der die Vorrichtung glaubt, sie sei durch das frequenzmodulierte Eingangssignal kodiert.

Gemäß einer Ausführungsform kann die Auswerteeinheit ausgebildet sein, eine der bekannten Datensequenzen als die ermittelte Datensequenz auszuwählen, der ein kanalspezifischer Signal-Rauschabstandswert zugeordnet ist, der größer ist als jeder andere kanalspezifische Signal-Rauschabstandswert, der einer anderen der bekannten Datensequenzen der Menge der bekannten Datensequenzen zugeordnet ist. Zum Beispiel bestimmt in dieser Ausführungsform die Auswerteeinheit, nachdem die kanalspezifischen Signal-Rauschabstandswerte für alle bekannten Datensequenzen bestimmt wurden, den größten kanalspezifischen Signal-Rauschabstandswert aller kanalspezifischen Signal-Rauschabstandswerte (es gibt keinen größeren Signal-Rauschabstandswert, der einer anderen bekannten Datensequenz zugeordnet ist). Die bekannte Datensequenz, der dieser größte Signal-Rauschabstandswert zugeordnet ist, wird von der Auswerteeinheit dann als die ermittelte Datensequenz ausgewählt.

Gemäß einer Ausführungsform kann die Filtereinheit zum Filtern des frequenzmodulierten Eingangssignals eingerichtet sein, um das erste frequenzgefilterte Kanalsignal mit einer ersten Mittenfrequenz und das zweite frequenzgefilterte Kanalsignal mit einer zweiten Mittenfrequenz zu erhalten. Ferner kann die Filtereinheit dabei so ausgebildet sein, dass ein Frequenzanteil der ersten Mittenfrequenz in dem zweiten frequenzgefilterten Kanalsignal null ist oder kleiner ist als ein Frequenzanteil der ersten Mittenfrequenz in dem ersten frequenzmodulierten Kanalsignal. Dabei kann die Filtereinheit so ausgebildet sein, dass ein Frequenzanteil der zweiten Mittenfrequenz in dem ersten frequenzgefilterten Kanalsignal null ist oder kleiner ist als ein Frequenzanteil der zweiten Mittenfrequenz in dem zweiten frequenzmodulierten Kanalsignal.

Eine Mittenfrequenz kann dabei ein Mittelwert, z.B. ein geometrisches Mittel, zwischen der unteren und oberen Grenzfrequenz eines Frequenzbands sein.

Gemäß einer Ausführungsform kann die Auswerteeinheit dafür eingerichtet sein, für jede der bekannten Datensequenzen der Menge der bekannten Datensequenzen jeweils eine Menge von kanalspezifischen Signal-Rauschabstandswerten dieser bekannten Datensequenz zu bestimmen, wobei die Menge der kanalspezifischen Signal-Rauschabstandswerte dieser Datensequenz den ersten kanalspezifischen Signal-Rauschabstandswert dieser bekannten Datensequenz und den zweiten kanalspezifischen Signal-Rauschabstandswert dieser bekannten Datensequenz umfasst. Dabei kann die Auswerteeinheit dafür eingerichtet sein, für jede der bekannten Datensequenzen der Menge der bekannten Datensequenzen aus der Menge der kanalspezifischen Signal-Rauschabstandswerte dieser bekannten Datensequenz einen größten kanalspezifischen Signal-Rauschabstandswert als einen Datensequenz- Signal-Rauschabstandswert dieser bekannten Datensequenz auszuwählen, so dass kein anderer der kanalspezifischen Signal-Rauschabstandswerte aus der Menge der kanalspezifischen Signal-Rauschabstandswerte dieser bekannten Datensequenz größer ist. Des Weiteren kann die Auswerteeinheit in dieser Ausführungsform ferner zur Auswahl derjenigen bekannten Datensequenz als die ermittelte Datensequenz aus der Menge bekannter Datensequenzen eingerichtet sein, so dass es keine andere bekannte Datensequenz aus der Menge bekannter Datensequenzen gibt, deren Datensequenz-Signal-Rauschabstandswert größer ist, als der Datensequenz-Signal-Rauschabstandswert der ermittelten Datensequenz.

Somit wird in dieser Ausführungsform für jede der bekannten Datensequenzen (also der Datensequenz-Kandidaten) ein Datensequenz-Signal-Rauschabstandswert bestimmt und zwar basierend auf dieser bekannten Datensequenz, basierend auf dem ersten frequenzgefilterten Kanalsignal und basierend auf dem zweiten frequenzgefilterten Kanalsignal.

Der Datensequenz-Signal-Rauschabstandswert für jede der bekannten Datensequenzen kann dabei zum Beispiel so bestimmt werden, dass für jede der bekannten Datensequenzen jeweils eine Menge von kanalspezifischen Signal-Rauschabstandswerten bestimmt wird, z.B. für jedes der frequenzgefilterten Kanalsignale ein kanalspezifischer Signal-Rauschabstandswert für die jeweils betrachtete Datensequenz.

So kann in einem speziellen Ausführungsbeispiel die Auswerteeinheit 120 beispielsweise dafür eingerichtet sein, für jede der bekannten Datensequenzen der Menge der bekannten Datensequenzen wenigstens einen ersten kanalspezifischen Signal-Rauschabstandswert dieser bekannten Datensequenz für das erste frequenzgefilterte Kanalsignal in Abhängigkeit von dem ersten bandbegrenzen Kanalsignal und dieser bekannten Datensequenz als ein erstes Element der Menge der kanalspezifischen Signal-Rauschabstandswerte dieser bekannten Datensequenz zu bestimmen und wenigstens einen zweiten kanalspezifischen Signal-Rauschabstandswert dieser bekannten Datensequenz für das zweite frequenzgefilterte Kanalsignal in Abhängigkeit von dem zweiten frequenzgefilterten Kanalsignal und dieser bekannten Datensequenz als ein zweites Element der Menge der kanalspezifischen Signal-Rauschabstandswerte dieser bekannten Datensequenz zu bestimmen.

Die Auswerteeinheit 120 kann in einem Ausführungsbespiel dann ferner dafür eingerichtet sein, aus der Menge der kanalspezifischen Signal-Rauschabstandswerte einen größten kanalspezifischen Signal-Rauschabstandswert als den Datensequenz-Signal-Rauschabstandswert dieser bekannten Datensequenz auszuwählen, so dass kein anderer der kanalspezifischen Signal-Rauschabstandswerte aus der Menge der kanalspezifischen Signal-Rauschabstandswerte dieser bekannten Datensequenz größer ist.

Ein zugrundeliegendes Prinzip ist dabei folgendes:

Es wird davon ausgegangen, dass, wenn in einem Signalabschnitt des frequenzmodulierten Eingangssignals ein erster Datenwert kodiert ist, z.B. eine "0", dann das frequenzmodulierte Eingangssignal derart generiert wurde, dass das frequenzmodulierte Eingangssignal Frequenzanteile im Bereich einer ersten Kodierfrequenz $f_0$ aufweist, wobei diese Frequenzanteile nach der Filterung durch das Filterelement zwar noch im ersten frequenzgefilterten Kanalsignal vorhanden sind, aber nicht mehr im zweiten frequenzgefilterten Kanalsignal oder nur mit verringerter Leistung. Dementsprechend werden die entsprechenden Signalabschnitte im ersten frequenzgefilterten Kanalsignal eine entsprechend große Signalenergie aufweisen, z.B. eine entsprechend große mittlere Signalenergie. Dabei kann die Signalenergie des Signalabschnitts zum Beispiel die Summe der quadrierten Kanalsignalwerte dieses Signalabschnitts sein. Die mittlere Signalenergie des Signalabschnitts kann zum Beispiel die gemittelte Summe der quadrierten Kanalsignalwerte dieses Signalabschnitts sein.

Ferner wird davon ausgegangen, dass, wenn in einem Signalabschnitt des frequenzmodulierten Eingangssignals ein zweiter Datenwert kodiert ist, also z.B. eine "1" kodiert wurde, dann das frequenzmodulierte Eingangssignal derart generiert wurde, dass das frequenzmodulierte Eingangssignal Frequenzanteile im Bereich einer zweiten Kodierfrequenz $f_1$ aufweist, wobei diese Frequenzanteile nach der Filterung durch die Filtereinheit zwar noch im zweiten frequenzgefilterten Kanalsignal vorhanden sind, aber nicht mehr im ersten frequenzgefilterten Kanalsignal oder nur mit verringerter Leistung. Entsprechend werden die entsprechenden Signalabschnitte im ersten frequenzgefilterten Kanalsignal keine oder nur eine entsprechend kleine Signalenergie aufweisen, z.B. keine oder nur eine entsprechend kleine Signalenergie.

Zum Beispiel kann die Filtereinheit ein erstes Filterelement mit einem ersten Durchlassbereich zum Filtern des frequenzmodulierten Eingangssignals umfassen, um das erste frequenzgefilterte Kanalsignal zu erhalten.

Ferner kann einer Filtereinheit beispielsweise ein zweites Filterelement mit einem zweiten Durchlassbereich, der von dem ersten Durchlassbereich verschieden ist, zum Filtern des frequenzmodulierten Eingangssignals umfassen, um das zweite frequenzgefilterte Kanalsignal zu erhalten.

Das erste Filterelement kann dabei z.B. so ausgelegt sein, dass sich die erste Kodierfrequenz $f_0$ im Durchlassbereich des ersten Filterelements befindet, dass sich die zweite Kodierfrequenz $f_1$ aber nicht im Durchlassbereich des ersten Filterelements befindet.

Das zweite Filterelement kann dabei z.B. so ausgelegt sein, dass sich die zweite Kodierfrequenz $f_1$ im Durchlassbereich des zweiten Filterelements befindet, dass sich die erste Kodierfrequenz $f_0$ aber nicht im Durchlassbereich des zweiten Filterelements befindet.

Ferner wird davon ausgegangen, dass für die Vorrichtung bekannt ist, welcher Signalbereich des frequenzmodulierten Eingangssignals die kodierte Datensequenz kodiert. Um zu bestimmen, welcher Signalbereich des frequenzmodulierten Eingangssignals die kodierte Datensequenz kodiert, können zum Beispiel Verfahren zur Synchronisierung, wie sie aus dem Stand der Technik allgemein bekannt sind, eingesetzt werden.

Die Vorrichtung stellt nun jeweils die Hypothese auf, dass die von ihr gerade betrachtete (untersuchte) bekannte Datensequenz tatsächlich die in dem frequenzmodulierten Eingangssignal kodierte Datensequenz ist.

Die Auswerteeinheit kann dann beispielsweise einen ersten Signalleistungswert für das erste frequenzgefilterte Kanalsignal bestimmen, der die, z.B. gemittelte, Signalenergie für nur solche Signalabschnitte des ersten frequenzgefilterten Kanalsignals bestimmt, die laut der gerade betrachteten bekannten Datensequenz den ersten Datenwert kodieren. Für diejenige der bekannten Datensequenzen, die tatsächlich die kodierte Datensequenz ist, wird der erste Signalleistungswert besonders groß sein.

Ferner kann die Auswerteeinheit dann beispielsweise einen ersten Rauschleistungswert für das erste frequenzgefilterte Kanalsignal bestimmen, der die, z.B. gemittelte, Signalenergie nur für solche Signalabschnitte des ersten frequenzgefilterten Kanalsignals bestimmt, die laut der gerade betrachteten bekannten Datensequenz den ersten Datenwert gerade nicht kodieren. Für diejenige der bekannten Datensequenzen, die tatsächlich die kodierte Datensequenz ist, wird der erste Rauschleistungswert besonders klein sein.

Die Auswerteeinheit kann einen ersten kanalspezifischen Signal-Rauschabstandswert für jede der bekannten Datensequenzen bestimmen. Zum Beispiel kann der erste kanalspezifische Signal-Rauschabstandswert basierend auf einem Quotienten gebildet werden, der den ersten Signalleistungswert im Zähler und den ersten Rauschleistungswert im Nenner aufweist. Der erste kanalspezifische Signal-Rauschabstandswert einer betrachteten bekannten Datensequenz wird dann besonders groß sein, wenn diese Datensequenz tatsächlich die im frequenzmodulierten Eingangssignal kodierte Datensequenz ist.

Des Weiteren wird davon ausgegangen, dass, wenn in einem Signalabschnitt des frequenzmodulierten Eingangssignals der zweite Datenwert kodiert ist, z.B. eine "1", dann das frequenzmodulierte Eingangssignal derart generiert wurde, dass das frequenzmodulierte Eingangssignal Frequenzanteile im Bereich einer zweiten Mittenfrequenz des zweiten frequenzgefilterten Kanalsignals aufweist. Entsprechend werden die entsprechenden Signalabschnitte im zweiten frequenzgefilterten Kanalsignal eine entsprechend große Signalenergie aufweisen, z.B. eine entsprechend große mittlere Signalenergie.

Ferner wird davon ausgegangen, dass, wenn in einem Signalabschnitt des frequenzmodulierten Eingangssignals der zweite Datenwert nicht kodiert ist, wenn z.B. eine "0" kodiert wurde, dann das frequenzmodulierte Eingangssignal derart generiert wurde, dass das frequenzmodulierte Eingangssignal im Bereich einer zweiten Mittenfrequenz des zweiten frequenzgefilterten Kanalsignals keine oder nur geringe Frequenzanteile aufweist. Entsprechend werden die entsprechenden Signalabschnitte im zweiten frequenzgefilterten Kanalsignal keine oder nur eine entsprechend kleine Signalenergie aufweisen, z.B. keine oder nur eine entsprechend kleine mittlere Signalenergie.

Analog zu obigen Ausführungen, kann die Auswerteeinheit dann beispielsweise einen zweiten Signalleistungswert für das zweite frequenzgefilterte Kanalsignal bestimmen, der die, z.B. gemittelte, Signalenergie für nur solche Signalabschnitte des zweiten frequenzgefilterten Kanalsignals bestimmt, die laut der gerade betrachteten bekannten Datensequenz den zweiten Datenwert kodieren. Für diejenige der bekannten Datensequenzen, die tatsächlich die kodierte Datensequenz ist, wird der zweite Signalleistungswert besonders groß sein.

Ferner kann die Auswerteeinheit dann beispielsweise einen zweiten Rauschleistungswert für das zweite frequenzgefilterte Kanalsignal bestimmen, der die, z.B. gemittelte, Signalenergie für nur solche Signalabschnitte des zweiten frequenzgefilterten Kanalsignals bestimmt, die laut der gerade betrachteten bekannten Datensequenz den zweiten Datenwert gerade nicht kodieren. Für diejenige der bekannten Datensequenzen, die tatsächlich die kodierte Datensequenz ist, wird der zweite Rauschleistungswert besonders klein sein.

Die Auswerteeinheit kann einen zweiten kanalspezifischen Signal-Rauschabstandswert für jede der bekannten Datensequenzen bestimmen. Zum Beispiel kann der zweite kanalspezifischen Signal-Rauschabstandswert basierend auf einem Quotienten bestimmt werden, der den zweiten Signalleistungswert im Zähler und den zweiten Rauschleistungswert im Nenner aufweist. Der zweite kanalspezifische Signal-Rauschabstandswert einer betrachteten bekannten Datensequenz wird dann besonders groß sein, wenn diese Datensequenz tatsächlich die im frequenzmodulierten Eingangssignal kodierte Datensequenz ist.

In einer Ausführungsform kann die Auswerteeinheit nun für jede bekannte Datensequenz einen Datensequenz-Signal-Rauschabstandswert zum Beispiel dadurch bestimmen, dass sie den größten aller kanalspezifischen Signal-Rauschabstandswerte dieser Datensequenz als den Datensequenz-Signal-Rauschabstandswert dieser Datensequenz auswählt. Die Auswahl des Datensequenz-Signal-Rauschabstandswerts aus einer Menge von kanalspezifischen Signal-Rauschabstandswerten hat den Vorteil, dass, wenn einer der betrachteten Kanäle stärker als ein anderer betrachteter Kanal gestört, z.B. verrauscht ist, die Ermittlung der kodierten Datensequenz immer noch zuverlässig möglich ist.

Die oben dargestellten Konzepte funktioniert auch dann, wenn die Datenelemente der Datensequenz mehr als zwei Datenwerte annehmen können, z.B. indem die Filtereinheit dann mehr als zwei Kanalsignale generiert.

Beispielsweise kann die Datensequenz Datenwerte umfassen, die vier verschiedene Datenwerte annehmen können, z.B. "0", "1","2", "3". Entsprechend würde die Filtereinheit das frequenzmodulierte Eingangssignal filtern, um vier Kanalsignale zu erhalten, die jeweils eine Mittenfrequenz aufweisen, die jeweils einen der Datenwerte repräsentiert. Entsprechend würden beispielsweise für jede der bekannten Datensequenzen z.B. vier kanalspezifische Signal-Rauschabstandswerte bestimmt werden, z.B. durch Bestimmung von jeweils vier Signalleistungswerten und vier Rauschleistungswerten pro bekannter Datensequenz.

Im Folgenden werden spezifische Ausführungsbeispiele der Erfindung näher dargestellt. Der Einfachheit halber wird zur verständlicheren Darstellung zunächst auf die binäre Frequenzumtastung eingegangen. Einige Erläuterungen zur höherwertigen Frequenzumtastung finden sich weiter unten.

Ausgegangen wird von einer Übertragung, die mittels binärer Frequenzumtastung erfolgt. Die vom Sender basierend auf den zu übertragenden Logikwerten $d(t) \in \{0,1\}$ frequenzumgetasteten Signale $s_0(t)$ und $s_1(t)$ werden aufgrund der nichtidealen Übertragungseigenschaften eines verwendeten Kanals auf dem Übertragungsweg gestört und gedämpft, wobei sich die Stör- und Dämpfungseigenschaften des Übertragungskanals für $s_0(t)$ und $s_1(t)$ im Allgemeinen unterscheiden können, so dass sich für das am Empfänger ankommende Signal ergibt:

$$r(t) = \big|d(t) - 1\big| a_0 A \cos(2\pi f_0 t + \theta_0) + d(t) a_1 A \cos(2\pi f_1 t + \theta_1) + n(t) \qquad (4)$$

mit den im Allgemeinen unterschiedlichen Dämpfungen $a_0$ und $a_1$, sowie der Musterfunktion $n(t)$ eines im Allgemeinen frequenzselektiven Störprozesses.

Im Rahmen des erfindungsgemäßen Verfahrens wird das empfangene Signal $r(t)$ zunächst, wie bei einem konventionellen nichtkohärenten Empfänger für binäre Frequenzumtastung (BFSK-Empfänger), mittels auf die Frequenzen $f_0$ bzw. $f_1$ zentrierter Bandpassfilter auf zwei Kanäle aufgeteilt, so dass sich ergibt:

$$r_0(t) = |d(t) - 1| a_0 A \cos(2\pi f_0 t + \theta_0) + n_0(t) \tag{5}$$

und

$$r_1(t) = d(t) a_1 A \cos(2\pi f_1 t + \theta_1) + n_1(t), \tag{6}$$

mit den Musterfunktionen $n_0(t)$ und $n_1(t)$ zweier im Allgemeinen unterschiedlicher Störprozesse. Es ist hierbei unerheblich, ob es sich bei den Frequenzen $f_0$ und $f_1$ in den Signalen $r_0(t)$ und $r_1(t)$ um die vom Sender ausgesendeten Frequenzen oder um aus einer im Empfänger stattfindenden Mischung resultierende Frequenzen handelt. Innerhalb der Zeitabschnitte, in denen $d(t) = 0$ gilt, besteht das Signal $r_1(t)$ lediglich aus Störanteilen. Das Signal $r_0(t)$ dagegen setzt sich aus Stör- und Nutzanteilen zusammen. Für den Fall $d(t) = 1$ gilt diese Aussage analog: $r_1(t)$ setzt sich dann aus Stör- und Nutzanteilen, $r_0(t)$ lediglich aus Störanteilen zusammen. Die vorzeichenbehafteten Signale $r_0(t)$ und $r_1(t)$ werden anschließend in einem Rechenwerk, vorzugsweise in einem zeitdiskreten Rechenwerk, in vorzeichenlose Signale umgewandelt, vorzugsweise durch Quadrierung. Alle nachfolgend dargelegten Überlegungen gehen von der Annahme eines zeitdiskreten Rechenwerkes aus. Durch Ersetzen der entsprechenden Summenzeichen in den nachfolgend aufgeführten Formeln durch Integrale kann das Verfahren jedoch auch auf zeitkontinuierliche Systeme angewandt werden. Es ist des Weiteren unerheblich an welcher Stelle in der Signalverarbeitungskette des Empfängers das zeitkontinuierliche Empfangssignal in ein zeitdiskretes Signal umgesetzt wird. Bei der Verwendung zeitdiskreter Rechenwerke ist eine ausreichende Anzahl an Abtastwerten innerhalb eines Bitintervalls $T_b$ sicherzustellen. Bei der Wahl der Sequenzen in R sind vorzugsweise solche zu verwenden, die sich durch möglichst geringe Korrelationsmaxima auszeichnen, also näherungsweise orthogonal sind.

Bezeichnet man die Abtastrate als $1 / T_S$, so lassen sich die zeitdiskreten Empfangssignale als

$$r_0[n] = r_0(nT_s) \tag{7}$$

und

$$r_1[n] = r_1(nT_s), \tag{8}$$

mit $n \in \mathbb{N}_0$ ausdrücken. Hieraus ergibt sich der Erwartungswert der normierten Signalleistung innerhalb eines Bitintervalls $T_b$ in beiden Kanälen zu

$$\mu_0 = E\left\{r_0^2[n]\right\} = \frac{1}{K} \sum_{n=0}^{K-1} r_0^2[n] \tag{9}$$

und

$$\mu_1 = E\left\{r_1^2[n]\right\} = \frac{1}{K} \sum_{n=0}^{K-1} r_1^2[n], \tag{10}$$

mit der Anzahl der Abtastwerte pro Bitintervall $K = T_b / T_S$, wobei der Einfachheit halber von einem ganzzahligen Wert von $K$ ausgegangen wird, wobei in anderen Ausführung-formen $K$ auch nichtganzzahlige Werte annimmt. Liegt innerhalb eines Bitintervalls $T_b$ kein Nutzsignal im Kanal der Frequenz $f_0$, hat also der Sender den Logikwert "1" gesendet (ist somit im Bitintervall $T_b$ das Signal $s_1(t) = A\cos(2\pi f_1 t + \theta_1)$, wohingegen $s_0(t) = 0$ ist), so ist $\mu_0$ der Erwartungswert der normierten Rauschleistung innerhalb dieses Zeitabschnitts. Hat der Sender dagegen den Logikwert "0" übermittelt, so beschreibt $\mu_0$ den Erwartungswert der Summe aus Signal- und Rauschleistung. Der umgekehrte Fall gilt für $\mu_1$.

Für eine bekannte Sequenz $\mathbf{R}_i$ der Länge $N_S$ Bit lässt sich daher ein Schätzwert für das Signal-Rauschverhältnis $\gamma$ für beide Kanäle ermitteln, beispielsweise indem der Erwartungswert der Rauschleistung vom Erwartungswert der Summe aus Signal- und Rauschleistung abgezogen wird und das Ergebnis anschließend auf den Erwartungswert der Rauschleistung normiert wird.

Wird der Erwartungswert der normierten Signalleistung im Kanal der Frequenz $f_0$ über alle Intervalle, in denen $\mathbf{R}_i$ eine logische "0" enthält, als $\mu_{SN0}$, und der Erwartungswert der normierten Signalleistung im Kanal der Frequenz $f_0$ über alle Intervalle, in denen $\mathbf{R}_i$ eine logische "1" enthält, als $\mu_{N0}$ bezeichnet, so ergibt sich für den Schätzwert des Signal-Rauschverhältnisses in diesem Kanal:

$$\gamma_0 = \frac{\mu_{SN0} - \mu_{N0}}{\mu_{N0}} \, . \qquad (11)$$

Analog ergibt sich für den Schätzwert des Signal-Rauschverhältnisses im Kanal der Frequenz $f_1$ :

$$\gamma_1 = \frac{\mu_{SN1} - \mu_{N1}}{\mu_{N1}} \, , \qquad (12)$$

mit dem Erwartungswert $\mu_{SN1}$ der normierten Signalleistung im Kanal der Frequenz $f_1$ über alle Intervalle, in denen $\mathbf{R}_i$ eine logische "1" enthält, sowie mit dem Erwartungswert $\mu_{N1}$ der normierten Signalleistung im Kanal der Frequenz $f_1$ über alle Intervalle, in denen $\mathbf{R}_i$ eine logische "0" enthält.

Die Ermittlung dieser Erwartungswerte lässt sich ausgehend von einer bekannten Sequenz $\mathbf{R}_i$ der Länge $N_S$ Bit, mit einer Anzahl der Abtastwerte pro Bitintervall $K = T_b / T_S$ und den Empfangssignalen in beiden Kanälen $r_0[n]$ und $r_1[n]$ wie folgt ausdrücken:

$$\mu_{SN0} = \frac{1}{K \sum\limits_{j=1}^{N_s} \left| \mathbf{R}_{ij} - 1 \right|} \sum\limits_{j=1}^{N_s} \sum\limits_{n=(j-1)K}^{jK-1} r_0^2[n] \left| \mathbf{R}_{ij} - 1 \right| , \qquad (13)$$

$$\mu_{N0} = \frac{1}{K \sum\limits_{j=1}^{N_s} \mathbf{R}_{ij}} \sum\limits_{j=1}^{N_s} \sum\limits_{n=(j-1)K}^{jK-1} r_0^2[n] \mathbf{R}_{ij} , \qquad (14)$$

$$\mu_{SN1} = \frac{1}{K \sum\limits_{j=1}^{N_s} \mathbf{R}_{ij}} \sum\limits_{j=1}^{N_s} \sum\limits_{n=(j-1)K}^{jK-1} r_1^2[n] \mathbf{R}_{ij} , \qquad (15)$$

$$\mu_{N1} = \frac{1}{K\sum_{j=1}^{N_S}|\mathbf{R}_{ij}-1|} \sum_{j=1}^{N_S} \sum_{n=(j-1)K}^{jK-1} r_1^2[n]|\mathbf{R}_{ij}-1|.$$

(16)

Für die bekannte Sequenz $\mathbf{R}_i$ ist dabei $\mu_{SN0}$ ein erster kanalspezifischer Signalleistungswert, $\mu_{N0}$ ist ein erster kanalspezifischer Rauschleistungswert ($\mu_{SN0}$ und $\mu_{N0}$ sind jeweils kanalspezifisch für den Kanal mit der Frequenz $f_0$), $\mu_{SN1}$ ist ein zweiter kanalspezifischer Signalleistungswert und $\mu_{N1}$ ist ein zweiter kanalspezifischer Rauschleistungswert ($\mu_{SN1}$ und $\mu_{N1}$ sind jeweils kanalspezifisch für den Kanal mit der Frequenz $f_1$). Berechnet man hierauf basierend $\gamma_0$ und $\gamma_1$ zum Beispiel wie in den Formeln (11) und (12), so sind $\gamma_0$ und $\gamma_1$ kanalspezifische Signal-Rauschabstandswerte.

Eine Vorrichtung bzw. ein Verfahren gemäß einer Ausführungsform ermittelt nun die Werte $\gamma_0$ und $\gamma_1$ für alle M in einer definierten und bekannten Tabelle R vorkommenden Sequenzen $\mathbf{R}_i$ mit i=1,2,...,M und entscheidet sich anschließend für eine Sequenz aufgrund des Maximalwerts von $\gamma_0$ oder $\gamma_1$. In beiden Frequenzkanälen werden also, ausgehend von den *M* Referenzsequenzen, je *M* Schätzungen des Signal-Rauschabstandes durchgeführt. Als Grundlage zur Bestimmung der Intervalle die auf einem Logikwert "0" bzw. "1" in beiden Kanälen basieren, wird jeweils eine spezifische Referenzsequenz $\mathbf{R}_i$ für eine der insgesamt M Schätzungen des Signal-Rauschabstandes verwendet. Für jene Referenzsequenz, für welche die Schätzung des Signal-Rauschabstandes in einem der beiden Frequenzkanäle den größten Wert ergibt, kann angenommen werden, dass es sich um die vom Sender gesendete und somit korrekte Sequenz handelt.

Ausgehend von den empfangenen und abgetasteten Signalen $r_0[n]$ und $r_1[n]$ in beiden Kanälen werden also mit den Formeln (11) bis (16) die Schätzwerte des Signal-Rauschabstandes und

$$\gamma_{0,i} = \frac{\left[\frac{1}{K\sum_{j=1}^{N_S}|\mathbf{R}_{ij}-1|}\sum_{j=1}^{N_S}\sum_{n=(j-1)K}^{jK-1}r_0^2[n]|\mathbf{R}_{ij}-1|\right] - \left[\frac{1}{K\sum_{j=1}^{N_S}\mathbf{R}_{ij}}\sum_{j=1}^{N_S}\sum_{n=(j-1)K}^{jK-1}r_0^2[n]\mathbf{R}_{ij}\right]}{\frac{1}{K\sum_{j=1}^{N_S}\mathbf{R}_{ij}}\sum_{j=1}^{N_S}\sum_{n=(j-1)K}^{jK-1}r_0^2[n]\mathbf{R}_{ij}}$$

(17)

$$\gamma_{1,i} = \frac{\left[\frac{1}{K\sum_{j=1}^{N_S}\mathbf{R}_{ij}}\sum_{j=1}^{N_S}\sum_{n=(j-1)K}^{jK-1}r_1^2[n]\mathbf{R}_{ij}\right] - \left[\frac{1}{K\sum_{j=1}^{N_S}|\mathbf{R}_{ij}-1|}\sum_{j=1}^{N_S}\sum_{n=(j-1)K}^{jK-1}r_1^2[n]|\mathbf{R}_{ij}-1|\right]}{\frac{1}{K\sum_{j=1}^{N_S}|\mathbf{R}_{ij}-1|}\sum_{j=1}^{N_S}\sum_{n=(j-1)K}^{jK-1}r_1^2[n]|\mathbf{R}_{ij}-1|}$$

(18)

für alle *i* = 1,2, ... ,*M* in $\mathbf{R}$ vorkommenden Sequenzen $\mathbf{R}_i$ ermittelt. $\gamma_{0,i}$ und $\gamma_{1,i}$ sind wiederum kanalspezifische Signal-Rauschabstandswerte. Anschließend erfolgt die Entscheidung $\delta$ für eine Sequenz $\mathbf{R}_\delta$ abhängig vom Maximalwert aller $\gamma_{p,i}$ mit $p \in \{0,1\}$ :

$$\delta = \arg\max_{i}\left(\max_{p}\left(\gamma_{p,i}\right)\right), \quad i = 1,2,...,M, \quad p \in \{0,1\}. \tag{19}$$

Für die Entscheidungsfindung wird also für jedes der M Paare $\gamma_{0,i}$ und $\gamma_{1,i}$ untersucht, für welchen der beiden Kanäle die Schätzung des Signal-Rauschabstandes einen höheren Wert annimmt, und der kleinere Wert von $\gamma_{p,i}$ mit $p \in \{0,1\}$ wird verworfen. Anschließend wird geprüft, für welches $i$ das nun ermittelte $\gamma_{p,i}$ den Maximalwert annimmt. Dies ist schließlich die Entscheidung $\delta$ des Empfängers für eine Sequenz $\mathbf{R}_\delta$ aus $\mathbf{R}$.

Das hier vorgestellten Konzepte von Ausführungsformen haben, was die Wahrscheinlichkeit korrekter Entscheidungen anbelangt, sowohl bei über der Frequenz gleichverteiltem als auch bei als Funktion der Frequenz nicht konstantem Übertragungsverhalten signifikante Vorteile gegenüber konventionellen nichtkohärenten FSK-Empfängern mit anschließender Korrelationsbildung der empfangenen Sequenz mit den Referenzsequenzen. Gegenüber kohärenten FSK-Empfängern mit anschließender Korrelationsbildung zur Sequenzerkennung haben die ausführungsgemäßen Konzepte zum einen unter anderem den Vorteil einer einfacheren Realisierbarkeit. Zum anderen erweisen sich die Konzepte gemäß Ausführungsformen als vorteilhaft, was die Wahrscheinlichkeit korrekter Entscheidungen anbelangt, wenn sich die Stör- und Dämpfungseigenschaften in beiden Frequenzkanälen unterscheiden und diese Eigenschaften dem Empfänger nicht bekannt sind.

Das erfindungsgemäßen Konzepte beschränken sich nicht auf die hier angegebenen, bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

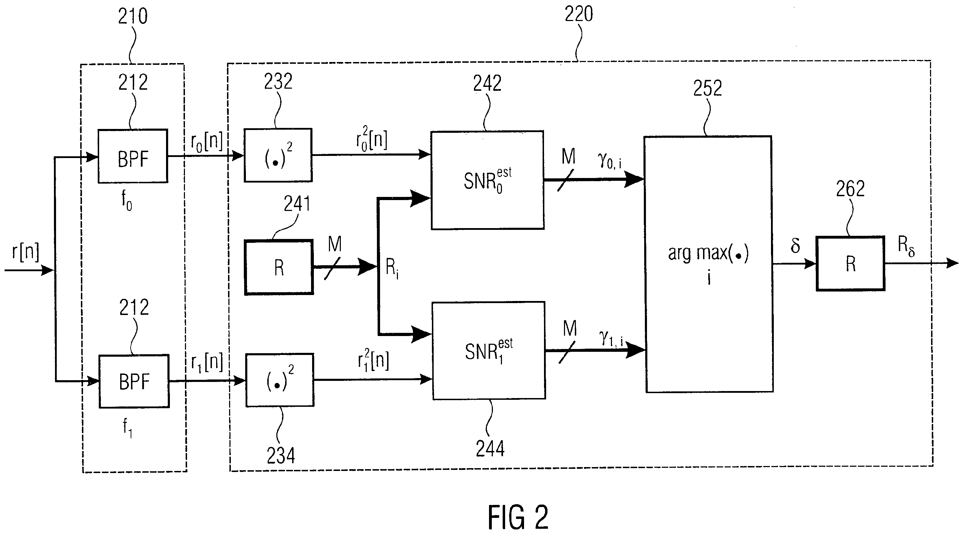

Fig. 2 zeigt eine Vorrichtung zur Ermittlung einer durch ein frequenzmoduliertes Eingangssignal kodierten Datensequenz gemäß einer weiteren Ausführungsform. Dabei wird von einer vor der frequenzmäßigen Trennung der beiden Kanäle stattfindenden zeitlichen Abtastung des Empfangssignals ausgegangen (nicht dargestellt). Die Abtastung kann jedoch auch an beliebiger anderer Stelle innerhalb der Signalverarbeitungskette stattfinden oder es kann, z.B. bei Verwendung zeitkontinuierlicher Rechenwerke, auf die zeitliche Abtastung verzichtet werden. Ferner wird in der Ausführungsform der Fig. 2 von einer Quadrierung der Signale $r_0$ und $r_1$ ausgegangen, die jedoch grundsätzlich auch z.B. durch eine Betragsbildung ersetzt werden kann. Schließlich lassen sich die erfindungsgemäßen Konzepte auch dann anwenden, wenn, anders als in der Ausführungsform der Fig. 2 dargestellt, das Empfangssignal einer Verstärkung, Dämpfung und/oder Frequenzumsetzung (Mischung) unterzogen wird.

In Fig. 2 wird das Eingangssignal r[n] zunächst mit den beiden auf die Frequenzen $f_0$ und $f_1$ zentrierten Bandpassfiltern (BPF) in zwei Signale $r_0$[n] und $r_1$ [n] aufgeteilt. Dies kann durch Filterelemente 212, 214 einer Filtereinheit 210 erfolgen. Die Filtereinheit 210 stellt dabei eine beispielhalte Ausgestaltung der Filtereinheit 110 gemäß einer Ausführungsform. dar. Es resultiert ein erstes frequenzgefiltertes Kanalsignal (Teilsignal) $r_0$[n] mit einer ersten Mittenfrequenz $f_0$ und ein zweites frequenzgefiltertes Kanalsignal (Teilsignal) $r_1$ [n] mit einer zweiten Mittenfrequenz $f_1$.

Die weitere Verarbeitung des ersten frequenzgefilterten Kanalsignals $r_0$[n] und des zweiten frequenzgefilterten Kanalsignals $r_1$[n] erfolgt in einer Auswerteeinheit 220, die eine beispielhalte Ausgestaltung der Auswerteeinheit 120 gemäß einer Ausführungsform darstellt.

Zunächst erfolgt dabei eine Quadrierung der beiden Kanalsignale (Teilsignale) in zwei Quadriereinheiten 232, 234, so dass sich die Signale $r_0^2[n]$ und $r_1^2[n]$ ergeben, die ein erstes quadriertes Kanalsignal $\left(r_0^2[n]\right)$ und ein zweites quadriertes Kanalsignal $\left(r_1^2[n]\right)$ darstellen.

Hiernach wird in den kanalspezifischen Signal-Rauschabstands-Bestimmungseinheiten $SNR_0^{est}$ 242 und $SNR_1^{est}$ 244 für jede der in der Speichereinheit 241 gespeicherten Tabelle R enthaltenen M Referenzsequenzen $\mathbf{R}_i$ (die bekannten Datensequenzen) eine Schätzung des Signal-Rauschabstandes (engl. Signal-to-Noise Ratio, *SNR*) gemäß der Gleichungen (17) und (18) durchgeführt, was für jeden der beiden Frequenzkanäle in *M* Schätzwerten $\gamma_{0,i}$ bzw. $\gamma_{1,i}$ resultiert. Mit anderen Worten: Kanalspezifische Signal-Rauschabstandswerte werden für jede der *M* bekannten Datensequenzen durch die Signal-Rauschabstands-Bestimmungseinheiten 242, 244 bestimmt.

Diese Schätzwerte (kanalspezifische Signal-Rauschabstandswerte) werden dann einer argmax-Einheit 252 zur Bestimmung des Arguments des Maximalwerts zugeführt. Die argmax-Einheit 252 bestimmt aus allen 2*M* Schätzwerten $\gamma_{0,i}$ und $\gamma_{1,i}$ den Maximalwert, also einen maximalen Signal-Rauschabstandswert, und gibt dessen Argument *i* aus (bezeichnet als $\delta$).

Ist die Tabelle **R** der *M* Referenzsequenzen $\mathbf{R}_i$ mit $\delta$ indiziert, so ergibt sich für eine Datensequenz-Ermittlungseinheit 262 jene Sequenz $\mathbf{R}_\delta$, als die ermittelte Datensequenz, die durch die erfindungsgemäßen Konzepte ausgehend von dem Empfangssignal *r*[n] bestimmt wurde. Die Datensequenz-Ermittlungseinheit 262 wählt somit diejenige bekannte Datensequenz der Menge der bekannten Datensequenzen als die ermittelte Datensequenz aus, der der maximale Signal-Rauschabstandswert zugeordnet ist.

Nachfolgend sollen einige Überlegungen und Erläuterungen zur Funktionsweise der erfindungsgemäßen Konzepte dargestellt werden. Es wird hierbei von einer Sequenzlänge $N_s$ von vier Bit ausgegangen. Sowohl diese Sequenzlänge als auch die im Rahmen des nachfolgenden Beispiels gewählten Bitfolgen der Referenzsequenzen sind vollkommen willkürlich und haben nur beispielhaften Charakter. Die erfindungsgemäßen Konzepte können grundsätzlich auf Sequenzen beliebiger Länge und beliebiger Bitfolgen angewendet werden. Es bietet sich jedoch an, solche Sequenzen zu verwenden, die näherungsweise orthogonal zueinander sind. Des Weiteren sind die hier gewählten Frequenzen $f_0$, $f_1$, sowie die Bitdauern $T_b$ und das Verhältnis von $f_0$ bzw. $f_1$ zu $T_b$ willkürlich und beispielhaft.

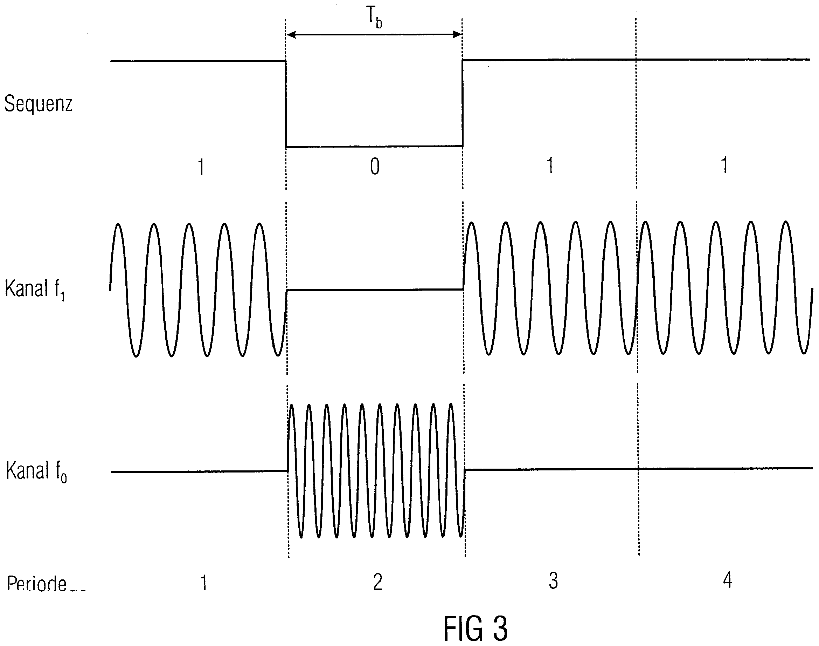

Fig. 3 zeigt die beiden frequenzgefilterten Kanalsignale gemäß einer Ausführungsform. Wieder wird von einem durch eine Modulationsvorschrift frequenzmodulierten Eingangssignal ausgegangen. Nach dieser Modulationsvorschrift wird zum Beispiel, wie bereits oben beschrieben, vom Sender ein sinusförmiges Signal der Frequenz $f_0$ ausgesendet, wenn in der kodierten Datensequenz als ein Datenwert (ein Logikwert) "0" vorliegt, bzw. ein sinusförmiges Signal der Frequenz $f_1$ ausgesendet, wenn als ein Datenwert (ein Logikwert) "1" vorliegt. $f_0$ kann dabei als eine erste Kodierfrequenz angesehen werden; $f_1$ kann dabei als eine zweite Kodierfrequenz angesehen werden. Dabei haben $f_0$ und $f_1$ unterschiedliche Werte: $f_0 \neq f_1$. Liegt also ein Logikwert "0" vor, so wird vom Sender ein Signal

$$s_0(t) = A\cos\left(2\pi f_0 t + \theta_0\right)$$

für die Dauer $T_b$ ausgesendet, bei einem Logikwert "1" dagegen das Signal

$$s_1(t) = A\cos\left(2\pi f_1 t + \theta_1\right)$$

mit den Phasenlangen der beiden Signale $\theta_0$ und $\theta_1$, die im Allgemeinen voneinander verschieden sind, sowie der Amplitude A.

Betrachtet wird zunächst eine binär frequenzumgetastete Sequenz mit der Bitfolge $S$ = "1011". Diese binäre frequenzumgetastete Sequenz setzt sich zusammen aus dem Signal in Kanal $f_0$ (Signal $r_0(t)$ bzw. $r_0[n]$) und Kanal $f_1$ (Signal $r_1(t)$ bzw. $r_1[n]$).

Zur einfacheren Veranschaulichung wird der gesamte dargestellte Zeitabschnitt in vier Perioden, jeweils der Dauer eines Bitintervalls $T_b$, unterteilt.

Die Vorrichtung bzw. das Verfahren gemäß einer Ausführungsform versucht nun, ausgehend von den Signalen in beiden Frequenzkanälen, die vom Sender ausgesendete Sequenz $S$ (hier "1011") aus einer endlichen Anzahl bekannter Sequenzen zu erkennen. Hierzu berechnet die Vorrichtung/das Verfahren Schätzungen des Signal-Rauschabstandes unter Zuhilfenahme aller ihm bekannten Referenzsequenzen.

Zunächst sei angenommen, dass die erste dem Empfänger in der Tabelle $R$ zur Verfügung stehende Sequenz $R_i$ mit $i$ = 1 die Sequenz $R_1$ = "1011" sei. In Kanal $f_0$ berechnet die Vorrichtung/das Verfahren daher über die Perioden 1, 3 und 4 (jene Perioden, für die in $R_1$ eine logische "1" vorliegt) den Erwartungswert der Signalleistung des empfangenen Signals und betrachtet das Ergebnis als "Rauschen". Entsprechend berechnet die erfindungsgemäße Vorrichtung/das erfindungsgemäße Verfahren über die Periode 3 (jene Perioden, für die in $R_1$ eine logische "0" vorliegt) ebenfalls den Erwartungswert der Signalleistung und betrachtet dieses Ergebnis als "Signal + Rauschen". Eine Schätzung des Signal-Rauschabstandes in Kanal $f_0$, ausgehend von der angenommenen Sequenz, ermittelt die erfindungsgemäße Vorrichtung/das erfindungsgemäße Verfahren daher entsprechend Formel (17) zu

$$\gamma_{0,1} = \frac{\text{"Signal + Rauschen"} - \text{"Rauschen"}}{\text{"Rauschen"}}.$$

Analog wird für Kanal $f_1$ der Erwartungswert der Signalleistung über jene Perioden, in denen $R_1$ eine logische "1" aufweist als "Signal + Rauschen", der Erwartungswert der Signalleistung über jene Perioden, in denen $R_1$ eine logische "0" aufweist dagegen als "Rauschen" betrachtet. Dies führt entsprechend Formel (18) zur Schätzung des Signal-Rauschabstandes $\gamma_{1,1}$ in Kanal $f_1$, ausgehend von der Sequenz $R_1$.

Hiernach führt die erfindungsgemäße Vorrichtung/das erfindungsgemäße Verfahren dieselben Operationen unter Zuhilfenahme der zweiten Sequenz $R_i$ mit $i$ = 2 aus der Tabelle $R$ aus. Es sei angenommen, dass $R_2$ = "0111". Für Kanäl $f_1$ bildet die erfindungsgemäße Vorrichtung/das erfindungsgemäße Verfahren nun den Erwartungswert der Signalleistung in Periode 1 und betrachtet das Signal als "Rauschen". In Wirklichkeit handelt es sich, entsprechend der Skizze zum Beispiel jedoch in Periode 1 in Kanal $f_1$ um die Leistung von Signal und Rauschanteilen, weswegen der vom erfindungsgemäßen Verfahren ermittelte Rauschanteil zu groß geschätzt wird. Entsprechend wird über die Perioden 2, 3 und 4 der Erwartungswert der Signalleistung ermittelt und als "Signal + Rauschen" interpretiert. In Periode 2 handelt es sich jedoch lediglich um Rauschleistung, weswegen "Signal + Rauschen" zu klein geschätzt wird. Anschließend wird wieder der Schätzwert für den Signal-Rauschabstand in Kanal $f_1$, diesmal ausgehend von Sequenz $\mathbf{R}_2$ ermittelt:

$$\gamma_{1,2} = \frac{\textit{"Signal + Rauschen"} - \textit{"Rauschen"}}{\textit{"Rauschen"}}.$$

Da "Signal + Rauschen" zu klein und "Rauschen" zu groß geschätzt wurde, ergibt sich für $\gamma_{1,2}$ ein kleinerer Wert als für $\gamma_{1,1}$. Es ist leicht ersichtlich, dass durch entsprechende Vorgehensweise auch in Kanal $f_0$ die Schätzung des Signal-Rauschabstandes $\gamma_{0,2}$, ausgehend von der Referenzsequenz $\mathbf{R}_2$, kleiner ist, als die Schätzung des Signal-Rauschabstandes $\gamma_{0,1}$, ausgehend von der Referenzsequenz $\mathbf{R}_1$.

Diese Vorgehensweise wird für alle $M$ Referenzsequenzen $\mathbf{R}_i$ der Tabelle $\mathbf{R}$ durchgeführt, was in jeweils $M$ Werten $\gamma_{0,i}$ und $\gamma_{1,i}$ resultiert.

Aus den oben aufgeführten Überlegungen geht hervor, dass unter allen $\gamma_{0,i}$ jener Schätzwert am größten ist, der auf der Referenzsequenz $\mathbf{R}_i$ aus $\mathbf{R}$ beruht, die mit der vom Sender ausgesendeten Sequenz $\mathbf{S}$ übereinstimmt. Gleiches gilt für $\gamma_{1,i}$.

Sei $y_{0,m}$ der maximale Wert aller $M$ Werte $\gamma_{0,i}$ und $\gamma_{1,n}$ der maximale Wert aller $M$ Werte $\gamma_{1,i}$. Ausgehend hiervon werden die beiden Werte $y_{0,m}$ und $\gamma_{1,n}$ verglichen und lediglich der größere der beiden Werte für die Entscheidungsfindung herangezogen. Angenommen $\gamma_{0,m}$ sei größer $y_{1,n}$, dann entscheidet sich das erfindungsgemäße Verfahren für die $m$-te Sequenz $\mathbf{R}_m$ aus der Tabelle $\mathbf{R}$. $m$ ist dabei eine Zahl zwischen 1 und $M$ und resultiert aus jener Referenzsequenz, für welche die Schätzung des Signal-Rauschabstandes maximal ist. Ist dagegen $\gamma_{1,n}$ größer als $\gamma_{0,m}$, so wird für die $n$-te Sequenz aus $\mathbf{R}$ entschieden. Durch Verwerfung des kleineren Wertes von $\gamma_{0,m}$ und $y_{1,n}$ wird lediglich jener der beiden zur Verfügung stehenden Frequenzkanäle betrachtet, der sich durch ein höheres Signal-Rauschverhältnis auszeichnet und daher zu einer sichereren Entscheidung führt. Diese Vorgehensweise ist insbesondere dann vorteilhaft, wenn sich die Stör- und Dämpfungseigenschaften für die Kanäle $f_0$ und $f_1$ unterscheiden. Es sei an dieser Stelle nochmals explizit darauf hingewiesen, dass der Empfänger hierfür nicht über Kenntnis dieser Übertragungseigenschaften verfügen muss.

Grundsätzlich eignen sich Vorrichtungen bzw. Verfahren zur Sequenzerkennung zur Adressierung bestimmter Empfänger in einem Netzwerk.

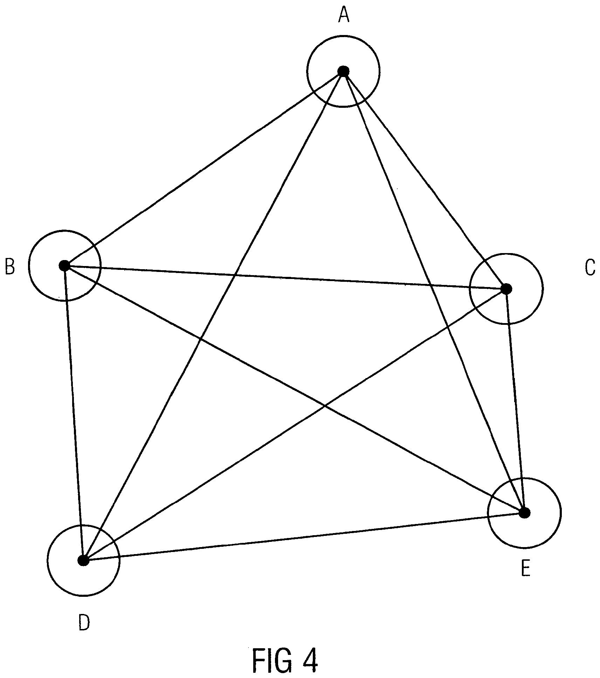

Fig. 4 zeigt ein Ausführungsbeispiel, bei dem ein Netzwerk mit 5 Kommunikationsknoten dargestellt ist, die sich dasselbe Übertragungsmedium teilen.

Jeder Kommunikationsknoten in Fig. 4 ist mit einem Sender-Empfänger ausgestattet und ist somit in der Lage mit den anderen Knoten Daten auszutauschen. Jeder Knoten ist mit einer in diesem Netzwerk eindeutigen Adresse $\mathbf{R}_i$, mit $i$ = 1,2, ... ,$M$ ($M$ ist die Anzahl der maximal in einem Netzwerk vorhandenen Knoten) versehen. Jeder der Knoten kennt seine eigene Adresse und die Adressen aller anderen im Netzwerk befindlichen Knoten. Diese Informationen sind in den Knoten in einer Tabelle $\mathbf{R}$ mit den Adressen aller Knoten abgelegt. Möchte beispielsweise Knoten A Daten an Knoten D senden, so muss Knoten A Knoten D adressieren. Hierzu sendet Knoten A zunächst die Adresse des Knotens D, hier bezeichnet als $\mathbf{R}_D$ aus. Durch das Übertragungsmedium gelangt die Nachricht mit der Adresse $\mathbf{R}_D$ zu allen im Netzwerk befindlichen Knoten. Die Übertragung der Adressdaten geschieht mittels Frequenzumtastung (hier wird erneut von binärer Frequenzumtastung ausgegangen).

Der erfindungsgemäßen Vorrichtung/dem erfindungsgemäßen Verfahren entsprechend, berechnet jeder im Netz vorhandene Knoten, ausgehend vom dem empfangenen Signal für beide Frequenzkanäle $f_0$ und $f_1$ die Schätzungen des Signalrauschabstandes unter Zuhilfenahme der in der Tabelle $\mathbf{R}$ gespeicherten Referenzsequenzen (bzw. Adressen) und erkennt die vom Sender übermittelte Sequenz (bzw. Adresse) anhand der maximalen Schätzung des Signal-Rauschabstandes, entsprechend Formel (19). Ist die in einem Empfangsknoten erkannte Sequenz nun gleich der Adresse, die diesem Knoten zugeteilt wurde, so gilt dieser Knoten als adressiert und kann nun mit Informationsdaten beliefert werden. Alle anderen Knoten stellen fest, dass die vom Sender übermittelte Adresse der Adresse eines anderen Knotens entspricht und ignorieren daher die nachfolgend übermittelten Daten. Im vorliegenden Beispiel erkennt Knoten D also, dass es sich bei der vom Sender übermittelten Sequenz um $\mathbf{R}_D$ handelt. Somit wurde Knoten D erfolgreich adressiert. Alle anderen Knoten erkennen ebenfalls die vom Sender übermittelte Sequenz $\mathbf{R}_D$. Da diesen Knoten jedoch andere Adressen $\mathbf{R}_i \neq \mathbf{R}_D$ zugewiesen wurden, gelten diese Knoten durch die Sequenz $\mathbf{R}_D$ nicht als adressiert.

Im Gegensatz zu konventionellen Adressierungsverfahren zeichnet sich das erfindungsgemäße Verfahren vor allem dadurch aus, dass die Adressierung bzw. Sequenzerkennung auch dann mit hoher Zuverlässigkeit funktioniert, wenn einer der beiden Frequenzkanäle stark, der andere dagegen nur moderat gestört ist.

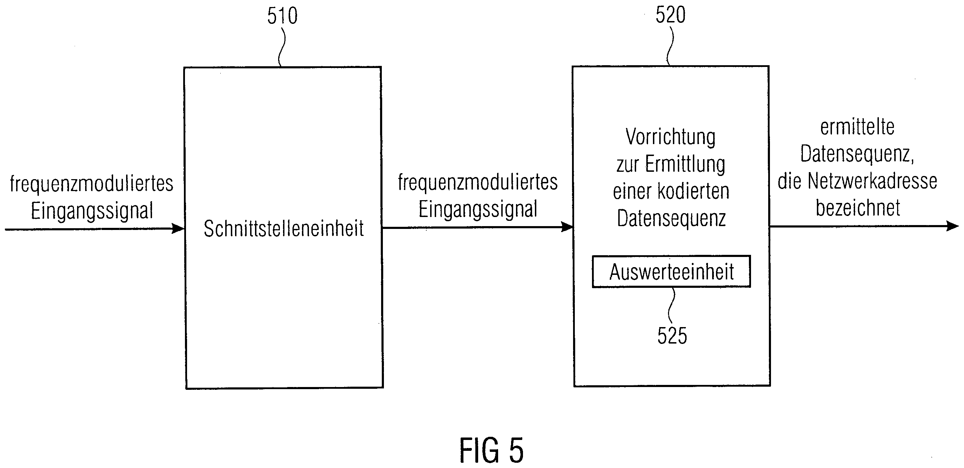

Fig. 5 zeigt eine Vorrichtung zur Erkennung einer Netzwerkadresse gemäß einer Ausführungsform, die durch ein frequenzmoduliertes Eingangssignal kodiert ist. Die Vorrichtung umfasst eine Schnittstelleneinheit 510 zum Empfang des frequenzmodulierten Eingangssignals. Ferner umfasst die Vorrichtung zur Erkennung einer Netzwerkadresse eine Vorrichtung 520 nach einer der oben beschriebenen Ausführungsformen zur Ermittlung einer durch das frequenzmodulierte Eingangssignal kodierten Datensequenz, die eine Mehrzahl von Datenelementen umfasst, wobei die kodierte Datensequenz eine Netzwerkadresse bezeichnet, wobei die Auswerteeinheit 525 der Vorrichtung 520 nach einem der oben beschriebenen Ausführungsformen zur Bestimmung eines Datensequenz-Signal-Rauschabstandswertes für jede bekannte Datensequenz einer Menge bekannter Datensequenzen eingerichtet ist, wobei jede bekannte Datensequenz der Menge bekannter Datensequenzen jeweils eine Netzwerkadresse bezeichnet.

Besonders vorteilhaft stellt sich die erfindungsgemäße Vorrichtung/das erfindungsgemäße Verfahren dar, wenn es zur Adressierung eins SFSK-Empfängers [2] verwendet wird. In einem SFSK-Empfänger werden die Daten aus dem empfangenen und binär frequenzumgetasteten Signal demoduliert, indem, abhängig von den Übertragungseigenschaften, dem Signal in Kanal $f_0$ bzw. $f_1$ mehr Gewicht bei der Entscheidungsfindung beigemessen wird. Ist Kanal $f_0$ stärker gestört als Kanal $f_1$, so wird das in Kanal $f_1$ vorhandene Signal $r_1$ stärker gewichtet als $r_0$, um die Entscheidung zu treffen, ob es sich bei dem dem Empfangssignal zugrundeliegenden Logikwert um eine "0" oder eine "1" handelt. Da für SFSK-Empfänger Kenntnis bezüglich der Übertragungseigenschaften benötigt wird, werden bei diesem Verfahren, vor der Übermittlung von Nutzdaten, bekannte Datenfolgen gesendet, anhand derer der Empfänger die Übertragungseigenschaften ableiten kann. Das Übersenden bekannter Datenfolgen schränkt hierbei die Nutzdatenrate ein und führt zu zusätzlichem Aufwand. Wird dagegen ein SFSK-Empfänger in Verbindung mit der erfindungsgemäßen Vorrichtung oder dem erfindungsgemäßen Verfahren verwendet, so entfällt dieser Zusatzaufwand, da sich die vom SFSK-Empfänger benötigten Informationen über die Kanaleigenschaften implizit aus den Berechnungen der erfindungsgemäßen Vorrichtung bzw. des erfindungsgemäßen Verfahrens ergeben und somit an den SFSK-Empfänger weitergegeben werden können.

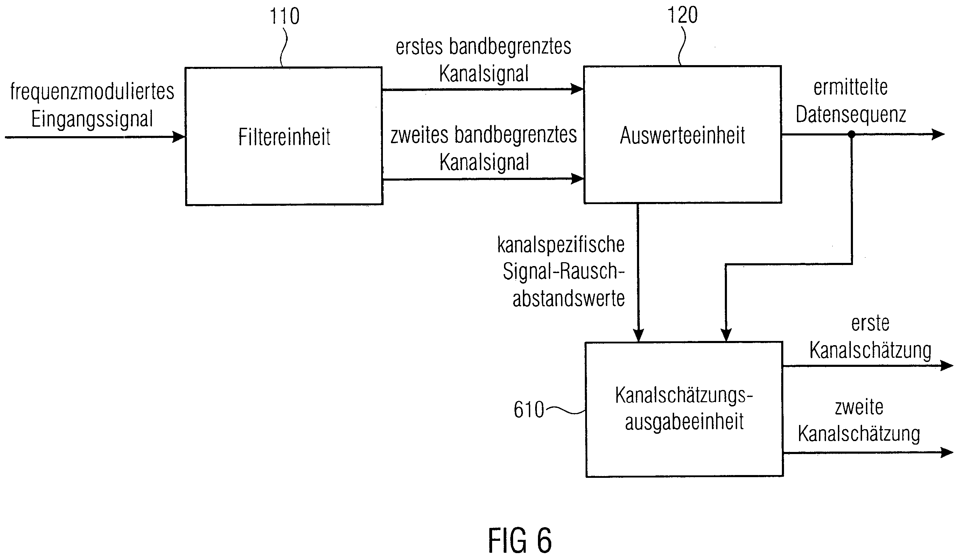

Fig. 6 zeigt eine Vorrichtung zur Ermittlung einer durch ein frequenzmoduliertes Eingangssignal kodierten Datensequenz gemäß einer der oben beschriebenen Ausführungs-formen, die ferner eine Kanalschätzungs-Ausgabeeinheit 610 aufweist. Die Kanalschätzungs-Ausgabeeinheit 610 ist ausgebildet, den ersten kanalspezifischen Signal-Rauschabstandswert der ermittelten Datensequenz als eine erste Kanalschätzung eines ersten Kanals auszugeben. Ferner ist die Kanalschätzungs-Ausgabeeinheit 610 ausgebildet, den zweiten kanalspezifischen Signal-Rauschabstandswert der ermittelten Datensequenz als eine zweite Kanalschätzung eines zweiten Kanals auszugeben. Hierzu kann die Kanalschätzungs-Ausgabeeinheit 610 von der Auswerteeinheit 120 Informationen über die ermittelte Datensequenz und die kanalspezifischen Signal-Rauschabstandswerte erhalten. Die erste Kanalschätzung des ersten Kanals und die zweite Kanalschätzung des zweiten Kanals kann dann von einem SFSK-Empfänger genutzt werden, die dann die Kanalschätzungen nicht seinerseits bestimmen muss, sondern auf die Kanalschätzung der Vorrichtung der Fig. 6 zurückgreifen kann. Soweit die Filtereinheit 110 mehr als zwei Kanalsignale erzeugt, kann auch für den dritten und jeden weiteren Kanal eine dritte bzw. weitere Kanalschätzung unter Anwendung derselben Konzepte wie für zwei Kanäle von der Kanalschätzungs-Ausgabeeinheit 610 ausgegeben werden.

Im Folgenden wird eine Erweiterung für höherwertige Frequenzumtastung bereitgestellt. Wie bereits angesprochen, lassen sich die oben beschriebenen Konzepte auch auf höherwertige Frequenzumtastung (sogenannte m-FSK) anwenden. Bei einer Frequenzumtastung der Wertigkeit $m$ werden $\log_2 m$ Logikwerte (z.B. Bits) im Sender zu Symbolen zusammengefasst, wodurch sich $m$ verschiedene Symbole $\mathbf{S}_0$ bis $\mathbf{S}_{m-1}$ ergeben, die anschließend vom Sender in $m$ verschiedene Sendefrequenzen $f_0$ bis $f_{m-1}$ umgesetzt werden, wie beispielsweise in [1] beschrieben ist.

Dabei ist $m$ eine Zweierpotenz: $m = 2^N$ mit $N \in \mathbb{N}$. Die Abbildung der Logikwerte auf die Symbole folgt einer bestimmten Abbildungsvorschrift. Eine solche Abbildungsvorschrift kann im Falle einer 4-FSK beispielsweise sein, dass eine Bitfolge "00" durch das Symbol $\mathbf{S}_0$ beschrieben und somit als Signal im Kanal der Frequenz $f_0$ übertragen wird. Sender und Empfänger verwenden die gleiche Abbildungsvorschrift. Im Empfänger erfolgt dann eine Aufteilung des Empfangssignals r(t) bzw. dessen zeitdiskreten Pendants r[n] in $m$ im Frequenzbereich nicht überlappende Teilsignale $r_0(t)$ bis $r_{m-1}(t)$ bzw. $r_0[n]$ bis $r_{m-1}[n]$ mittels $m$ auf die Frequenzen $f_0$ bis $f_{m-1}$ zentrierter Bandpassfilter. Zu einem gegebenen Zeitpunkt liegt daher nur in einem der $m$ Kanäle neben dem Rauschanteil ein Nutzsignal in Form eines Sinussignals vor, während alle anderen Kanäle lediglich Rauschen aufweisen.

Bei der weiter oben beschriebenen binären Frequenzumtastung ist $m = 2$, wobei ein Datenwert (z.B. ein Logikwert) "0" dem Symbol $S_0$ und ein Datenwert (z.B. ein Logikwert) "1" dem Symbol $\mathbf{S}_1$ zugeordnet wurde. Somit erfolgte die Übertragung eines Logikwertes "0" durch ein Sinussignal im Kanal $f_0$ und ein Logikwert "1" durch ein Sinussignal im Kanal $f_1$.

Bei Verwendung einer höherwertigen Frequenzumtastung ($m > 2$) zur senderseitigen Modulation der Logikwerte kann das erfindungsgemäße Verfahren zur Sequenzerkennung verwendet werden, indem die Formeln (5) bis (19) entsprechend angepasst werden:

In Analogie mit den Formeln (5) und (6) lässt sich das Empfangssignal im $p$-ten Frequenzkanal (also im auf die Frequenz $f_p$ zentrierten Kanal) als Funktion der Zeit wie folgt beschreiben:

$$r_p(t) = S_x a_p A \cos(2\pi f_p t + \theta_p) + n_p(t), \quad p = 0,1,\ldots,m-1 \,. \tag{20}$$

Dabei ist $S_x = 1$ wenn vom Sender ein Symbol gesendet wurde, dass dem Frequenzkanal $f_p$ zugewiesen ist, wenn also gilt $x = p$, ansonsten ist $S_x = 0$. $a_p$ beschreibt die Dämpfung und $n_p(t)$ die Musterfunktion eines Rauschprozesses im $p$-ten Frequenzkanal.

Durch die gleichen Gedankenschritte wie bei der Herleitung der Formeln (17) und (18) für die Schätzung des Signal-Rauschabstandes in beiden Kanälen im Falle binärer Frequenzumtastung ergibt sich für den Schätzwert des Signal-Rauschabstandes $\gamma_{p,i}$ im $p$-ten Kanal auf Basis der verwendeten Referenzsequenz $\mathbf{R}_i$ im Falle einer höherwertigen Frequenzumtastung

$$\gamma_{p,i} = \frac{\left[ \dfrac{1}{K \sum\limits_{j=1}^{N_s} \mathbf{P}_{ij}} \sum\limits_{j=1}^{N_s} \sum\limits_{n=(j-1)K}^{jK-1} r_p^2[n]\mathbf{P}_{ij} \right] - \left[ \dfrac{1}{K \sum\limits_{j=1}^{N_s} \left|\mathbf{P}_{ij}-1\right|} \sum\limits_{j=1}^{N_s} \sum\limits_{n=(j-1)K}^{jK-1} r_p^2[n]\left|\mathbf{P}_{ij}-1\right| \right]}{\dfrac{1}{K \sum\limits_{j=1}^{N_s} \left|\mathbf{P}_{ij}-1\right|} \sum\limits_{j=1}^{N_s} \sum\limits_{n=(j-1)K}^{jK-1} r_p^2[n]\left|\mathbf{P}_{ij}-1\right|} \,, \tag{21}$$

mit $p = 0, 1, \ldots, m-1$ und $i = 1, 2, \ldots, M$. $K = T_{symb}/T_S$ beschreibt hier die Anzahl der Abtastwerte pro Symbolintervall $T_{symb}$. Für $\mathbf{P}_{ij}$ gilt

$$\mathbf{P}_{ij} = \begin{cases} 1 & \text{wenn } \mathbf{R}_{ij} = S_p, \\ 0 & \text{sonst.} \end{cases} \tag{22}$$

$\mathbf{R}$ ist hierbei die Tabelle mit den M Referenzsequenzen $\mathbf{R}_i$, deren Elemente $\mathbf{R}_{ij}$ die Symbole darstellen, die sich durch die Abbildungsvorschrift aus entsprechenden Bitwerten ergeben. $N_S$ ist die Anzahl der Symbole in einer Referenzsequenz. $\mathbf{P}_{ij}$ nimmt also den Wert 1 an, wenn das $j$-te Element der Referenzsequenz $\mathbf{R}_i$ der Tabelle $\mathbf{R}$ dem Symbol $S_p$ entspricht, wenn also davon ausgegangen wird, dass zum betrachteten Zeitpunkt ein Nutzsignal im $p$-ten Kanal vorliegt. Ist andernfalls $\mathbf{R}_{ij}$ ungleich $S_p$, so wird davon ausgegangen, dass zum betrachteten Zeitpunkt im $p$-ten Kanal lediglich Rauschen vorliegt, und $\mathbf{P}_{ij}$ geht mit dem Wert 0 in Formel (21) ein.

Schließlich erfolgt in Analogie zu Formel (19) die Entscheidung $\delta$ für eine Sequenz $R_\delta$ abhängig vom Maximalwert aller $\gamma_{p,i}$ zu

$$\delta = \arg\max_i \left( \max_p \left( \gamma_{p,i} \right) \right), \quad i = 1,2,\ldots,M, \quad p = 0,1,\ldots,m-1 \,. \tag{23}$$

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist die Erfindung lediglich durch den Schutzumfang der nachstehenden Patentansprüche 1-15 und nicht durch die spezifischen Einzelheiten, die anhand der Beschreibung und der Erläuterung der Ausführungsbeispiele hierin präsentiert wurden, beschränkt.

### Literaturverzeichnis

[1] F. Xiong, Digital Modulation Techniques, Artech House, Inc., zweite Auflage, 2006.

[2] T. Schaub, Spread Frequency Shift Keying, IEEE Transactions on Communications, Feb. 1994, Ausgabe 42, Nummer 234, Seiten 1056 - 1064.

### Patentansprüche

1. Vorrichtung zur Ermittlung einer kodierten Datensequenz als eine ermittelte Datensequenz, wobei die kodierte Datensequenz durch ein gemäß einer Modulationsvorschrift frequenzmoduliertes Eingangssignal kodiert ist, wobei die kodierte Datensequenz eine Mehrzahl von Datenelementen umfasst, und wobei die Vorrichtung umfasst:

   eine Filtereinheit (110) zum Filtern des frequenzmodulierten Eingangssignals, um ein erstes frequenzgefiltertes Kanalsignal und ein zweites frequenzgefiltertes Kanalsignal zu erhalten,
   die Vorrichtung dadurch charakterisiert, dass sie weiterhin umfasst: eine Auswerteeinheit (120), die ausgebildet ist, für jede bekannte Datensequenz einer Menge bekannter Datensequenzen zwei kanalspezifische Signal-Rauschabstandswerte dieser bekannten Datensequenz zuzuordnen,
   wobei die Auswerteeinheit (120) ausgebildet ist, für jede bekannte Datensequenz der Menge bekannter Datensequenzen einen ersten der zwei kanalspezifischen Signal-Rauschabstandswerte, die dieser Datensequenz zugeordnet sind, basierend auf dieser bekannten Datensequenz und basierend auf dem ersten frequenzgefilterten Kanalsignal als einen ersten kanalspezifischen Signal-Rauschabstandswert dieser bekannten Datensequenz zu bestimmen,

wobei die Auswerteeinheit (120) ausgebildet ist, für jede bekannte Datensequenz der Menge bekannter Datensequenzen einen zweiten der zwei kanalspezifischen Signal-Rauschabstandswerte, die dieser Datensequenz zugeordnet sind, basierend auf dieser bekannten Datensequenz und basierend auf dem zweiten frequenzgefilterten Kanalsignal als einen zweiten kanalspezifischen Signal-Rauschabstandswert dieser bekannten Datensequenz zu bestimmen, und

wobei die Auswerteeinheit (120) ausgebildet ist, eine bekannte Datensequenz aus der Menge der bekannten Datensequenzen als die ermittelte Datensequenz auszuwählen, der ein kanalspezifischer Signal-Rauschabstandswert zugeordnet ist, der größer ist als ein anderer kanalspezifischer Signal-Rauschabstandswert, der einer anderen der bekannten Datensequenzen zugeordnet ist.

2. Vorrichtung nach Anspruch 1, wobei die Auswerteeinheit (120) ausgebildet ist, eine der bekannten Datensequenzen als die ermittelte Datensequenz auszuwählen, der ein kanalspezifischer Signal-Rauschabstandswert zugeordnet ist, der größer ist als jeder andere kanalspezifische Signal-Rauschabstandswert, der einer anderen der bekannten Datensequenzen der Menge der bekannten Datensequenzen zugeordnet ist.

3. Vorrichtung nach Anspruch 1 oder 2
wobei die Filtereinheit (110) zum Filtern des frequenzmodulierten Eingangssignals eingerichtet ist, um das erste frequenzgefilterte Kanalsignal mit einer ersten Mittenfrequenz und das zweite frequenzgefilterte Kanalsignal mit einer zweiten Mittenfrequenz zu erhalten,

wobei die Filtereinheit (110) so ausgebildet ist, dass ein Frequenzanteil der ersten Mittenfrequenz in dem zweiten frequenzgefilterten Kanalsignal null ist oder kleiner ist als ein Frequenzanteil der ersten Mittenfrequenz in dem ersten frequenzmodulierten Kanalsignal, und

wobei die Filtereinheit (110) so ausgebildet ist, dass ein Frequenzanteil der zweiten Mittenfrequenz in dem ersten frequenzgefilterten Kanalsignal null ist oder kleiner ist als ein Frequenzanteil der zweiten Mittenfrequenz in dem zweiten frequenzmodulierten Kanalsignal.

4. Vorrichtung nach einem der Ansprüche 1 bis 3,
wobei die Auswerteeinheit (120) dafür eingerichtet ist, für jede der bekannten Datensequenzen der Menge der bekannten Datensequenzen jeweils eine Menge von kanalspezifischen Signal-Rauschabstandswerten dieser bekannten Datensequenz zu bestimmen, wobei die Menge der kanalspezifischen Signal-Rauschabstandswerte dieser Datensequenz den ersten kanalspezifischen Signal-Rauschabstandswert dieser bekannten Datensequenz und den zweiten kanalspezifischen Signal-Rauschabstandswert dieser bekannten Datensequenz umfasst,

wobei die Auswerteeinheit (120) dafür eingerichtet ist, für jede der bekannten Datensequenzen der Menge der bekannten Datensequenzen aus der Menge der kanalspezifischen Signal-Rauschabstandswerte dieser bekannten Datensequenz einen größten kanalspezifischen Signal-Rauschabstandswert als einen Datensequenz-Signal-Rauschabstandswert dieser bekannten Datensequenz auszuwählen, so dass kein anderer der kanalspezifischen Signal-Rauschabstandswerte aus der Menge der kanalspezifischen Signal-Rauschabstandswerte dieser bekannten Datensequenz größer ist, und

wobei die Auswerteeinheit (120) ferner zur Auswahl derjenigen bekannten Datensequenz als die ermittelte Datensequenz aus der Menge bekannter Datensequenzen eingerichtet ist, so dass es keine andere bekannte Datensequenz aus der Menge bekannter Datensequenzen gibt, deren Datensequenz-Signal-Rauschabstandswert grö-ßer ist, als der Datensequenz-Signal-Rauschabstandswert der ermittelten Datensequenz.

5. Vorrichtung nach einem der vorherigen Ansprüche,
wobei die Auswerteeinheit (120) dafür eingerichtet ist, für jede der bekannten Datensequenzen einen ersten Signalleistungswert dieser bekannten Datensequenz in Abhängigkeit von dieser bekannten Datensequenz und von dem ersten frequenzgefilterten Kanalsignal zu bestimmen,

wobei die Auswerteeinheit (120) dafür eingerichtet ist, für jede der bekannten Datensequenzen den ersten kanalspezifischen Signal-Rauschabstandswert dieser bekannten Datensequenz in Abhängigkeit von dem ersten Signalleistungswert dieser bekannten Datensequenz zu bestimmen,

wobei die Auswerteeinheit (120) dafür eingerichtet ist, für jede der bekannten Datensequenzen einen zweiten Signalleistungswert dieser bekannten Datensequenz in Abhängigkeit von dieser bekannten Datensequenz und von dem zweiten frequenzgefilterten Kanalsignal zu bestimmen, und

wobei die Auswerteeinheit (120) dafür eingerichtet ist, für jede der bekannten Datensequenzen den zweiten kanalspezifischen Signal-Rauschabstandswert dieser bekannten Datensequenz in Abhängigkeit von dem zweiten Signalleistungswert dieser bekannten Datensequenz zu bestimmen.

6. Vorrichtung nach Anspruch 5,

wobei die Auswerteeinheit (120) dafür eingerichtet ist, für jede der bekannten Datensequenzen einen ersten Rauschleistungswert dieser bekannten Datensequenz in Abhängigkeit von dieser bekannten Datensequenz und von dem ersten frequenzgefilterten Kanalsignal zu bestimmen,

wobei die Auswerteeinheit (120) dafür eingerichtet ist, für jede der bekannten Datensequenzen den ersten kanalspezifischen Signal-Rauschabstandswert dieser bekannten Datensequenz in Abhängigkeit von dem ersten Signalleistungswert dieser bekannten Datensequenz und dem ersten Rauschleistungswert dieser bekannten Datensequenz zu bestimmen, so dass der erste kanalspezifische Signal-Rauschabstandswert dieser bekannten Datensequenz ein Größenverhältnis des ersten Signalleistungswerts dieser bekannten Datensequenz zu dem ersten Rauschleistungswert dieser bekannten Datensequenz angibt,

wobei die Auswerteeinheit (120) dafür eingerichtet ist, für jede der bekannten Datensequenzen einen zweiten Rauschleistungswert dieser bekannten Datensequenz in Abhängigkeit von dieser bekannten Datensequenz und von dem zweiten frequenzgefilterten Kanalsignal zu bestimmen, und

wobei die Auswerteeinheit (120) dafür eingerichtet ist, für jede der bekannten Datensequenzen den zweiten kanalspezifischen Signal-Rauschabstandswert dieser bekannten Datensequenz in Abhängigkeit von dem zweiten Signalleistungsweit dieser bekannten Datensequenz und dem zweiten Rauschleistungswert dieser bekannten Datensequenz zu bestimmen, so dass der zweite kanalspezifische Signal-Rauschabstandswert dieser bekannten Datensequenz ein Größenverhältnis des zweiten Signalleistungswerts dieser bekannten Datensequenz zu dem zweiten Rauschleistungswert dieser bekannten Datensequenz angibt.

7. Vorrichtung nach Anspruch 6,
wobei die Auswerteeinheit (120) dafür eingerichtet ist, für jede der bekannten Datensequenzen den ersten kanalspezifischen Signal-Rauschabstandswert dieser bekannten Datensequenz durch Berechnung von

$$\frac{\mu_{SN0} - \mu_{N0}}{\mu_{N0}}$$

oder durch Berechnung von

$$\frac{\mu_{SN0}}{\mu_{N0}}$$

zu berechnen,

wobei $\mu_{SN0}$ den ersten Signalleistungswert dieser bekannten Datensequenz bezeichnet, und
wobei $\mu_{N0}$ den ersten Rauschleistungswert dieser bekannten Datensequenz bezeichnet.

8. Vorrichtung nach einem der vorherigen Ansprüche,
wobei die Filtereinheit (110) zum Filtern des frequenzmodulierten Eingangssignals ausgebildet ist, um das erste frequenzgefilterte Kanalsignal, das zweite frequenzgefilterte Kanalsignal und ein drittes frequenzgefiltertes Kanalsignal zu erhalten,

wobei die Auswerteeinheit (120) ausgebildet ist, für jede bekannte Datensequenz einer Menge bekannter Datensequenzen drei kanalspezifische Signal-Rauschabstandswerte dieser bekannten Datensequenz zuzuordnen,

wobei die Auswerteeinheit (120) ausgebildet ist, für jede bekannte Datensequenz einer Menge bekannter Datensequenzen einen dritten der drei kanalspezifischen Signal-Rauschabstandswerte, die dieser Datensequenz zugeordnet sind, basierend auf dieser bekannten Datensequenz und basierend auf dem dritten frequenzgefilterten Kanalsignal als einen dritten kanalspezifischen Signal-Rauschabstandswert dieser bekannten Datensequenz zu bestimmen, und

wobei die Auswerteeinheit (120) ausgebildet ist, die bekannte Datensequenz aus der Menge der bekannten Datensequenzen als die ermittelte Datensequenz auszuwählen, der ein kanalspezifischer Signal-Rauschabstandswert zugeordnet ist, der größer ist als ein anderer kanalspezifischer Signal-Rauschabstandswert, der einer anderen der bekannten Datensequenzen zugeordnet ist.

9. Vorrichtung nach einem der Ansprüche 1 bis 7,
wobei die Filtereinheit (110) zum Filtern des frequenzmodulierten Eingangssignals ausgebildet ist, um das erste frequenzgefilterte Kanalsignal, das zweite frequenzgefilterte Kanalsignal, ein drittes frequenzgefiltertes Kanalsignal und ein viertes frequenzgefiltertes Kanalsignal zu erhalten,

wobei die Auswerteeinheit (120) ausgebildet ist, für jede bekannte Datensequenz einer Menge bekannter Datensequenzen vier kanalspezifische Signal-Rauschabstandswerte dieser bekannten Datensequenz zuzuordnen,

wobei die Auswerteeinheit (120) ausgebildet ist, für jede bekannte Datensequenz einer Menge bekannter Datensequenzen einen dritten der vier kanalspezifischen Signal-Rauschabstandswerte, die dieser Datensequenz zugeordnet sind, basierend auf dieser bekannten Datensequenz und basierend auf dem dritten frequenzgefilterten Kanalsignal als einen dritten kanalspezifischen Signal-Rauschabstandswert dieser bekannten Datensequenz zu bestimmen,

wobei die Auswerteeinheit (120) ausgebildet ist, für jede bekannte Datensequenz einer Menge bekannter Datensequenzen einen vierten der vier kanalspezifischen Signal-Rauschabstandswerte, die dieser Datensequenz zugeordnet sind, basierend auf dieser bekannten Datensequenz und basierend auf dem vierten frequenzgefilterten Kanalsignal als einen vierten kanalspezifischen Signal-Rauschabstandswert dieser bekannten Datensequenz zu bestimmen, und

wobei die Auswerteeinheit (120) ausgebildet ist, die bekannte Datensequenz aus der Menge der bekannten Datensequenzen als die ermittelte Datensequenz auszuwählen, der ein kanalspezifischer Signal-Rauschabstandswert zugeordnet ist, der größer ist als ein anderer kanalspezifischer Signal-Rauschabstandswert, der einer anderen der bekannten Datensequenzen zugeordnet ist.

10. Vorrichtung nach einem der vorherigen Ansprüche, wobei die Vorrichtung dazu eingerichtet ist, eine kodierte Datensequenz zu ermitteln, die durch das frequenzmodulierte Eingangssignal kodiert ist, das durch die Modulationsvorschrift frequenzmoduliert ist, wobei die Modulationsvorschrift eine Frequenzumtastung ist.

11. Vorrichtung nach einem der vorherigen Ansprüche,

wobei die Auswerteeinheit (120) eine erste Quadriereinheit (232) zur Quadrierung des ersten fi-equenzgefilterten Kanalsignals aufweist, um ein erstes quadriertes Kanalsignal zu erhalten,

wobei die Auswerteeinheit (120) eine zweite Quadriereinheit (234) zur Quadrierung des zweiten frequenzgefilterten Kanalsignals aufweist, um ein zweites quadriertes Kanalsignal zu erhalten,

wobei die Auswerteeinheit (120) ferner eine Speichereinheit (241) zur Speicherung der Menge der bekannten Datensequenzen aufweist,

wobei die Auswerteeinheit (120) ferner eine erste Signal-Rauschabstands-Bestimmungseinheit (242) aufweist, um für jede bekannte Datensequenz der Menge der bekannten Datensequenzen den ersten kanalspezifischen Signal-Rauschabstandswert dieser Datensequenz basierend auf dieser bekannten Datensequenz und dem ersten quadrierten Kanalsignal zu erhalten,

wobei die Auswerteeinheit (120) ferner eine zweite Signal-Rauschabstands-Bestimmungseinheit (244) aufweist, um für jede bekannte Datensequenz der Menge der bekannten Datensequenzen den zweiten kanalspezifischen Signal-Rauschabstandswert dieser Datensequenz basierend auf dieser bekannten Datensequenz und dem zweiten quadrierten Kanalsignal zu erhalten,

wobei die Auswerteeinheit (120) ferner eine argmax-Einheit (252) aufweist, zur Bestimmung eines maximalen Signal-Rauschabstandswertes, und

wobei die Auswerteeinheit (120) ferner eine Datensequenz-Ermittlungseinheit (262) aufweist, um diejenige bekannte Datensequenz der Menge der bekannten Datensequenzen als die ermittelte Datensequenz auszuwählen, der der maximale Signal-Rauschabstandswert zugeordnet ist.

12. Vorrichtung nach einem der vorherigen Ansprüche,

wobei die Vorrichtung ferner eine Kanalschätzungs-Ausgabeeinheit (610) aufweist,

wobei die Kanalschätzungs-Ausgabeeinheit (610) ausgebildet ist, den ersten kanalspezifischen Signal-Rauschabstandswert der ermittelten Datensequenz als eine erste Kanalschätzung eines ersten Kanals auszugeben, und

wobei die Kanalschätzungs-Ausgabeeinheit (610) ausgebildet ist, den zweiten kanalspezifischen Signal-Rauschabstandswert der ermittelten Datensequenz als eine zweite Kanalschätzung eines zweiten Kanals auszugeben.

13. Vorrichtung zur Erkennung einer Netzwerkadresse, die durch ein frequenzmoduliertes Eingangssignal kodiert ist, umfassend:

eine Schnittstelleneinheit (510) zum Empfang des frequenzmodulierten Eingangssignals, und
eine Vorrichtung (520) nach einem der vorherigen Ansprüche zur Ermittlung einer durch das frequenzmodulierte Eingangssignal kodierten Datensequenz, die eine Mehrzahl von Datenelementen umfasst, wobei die kodierte Datensequenz eine Netzwerkadresse bezeichnet,
wobei die Auswerteeinheit (525) der Vorrichtung (520) nach einem der vorherigen Ansprüche zur Bestimmung eines Datensequenz-Signal-Rauschabstandswertes für jede bekannte Datensequenz einer Menge bekannter Datensequenzen eingerichtet ist, wobei jede bekannte Datensequenz der Menge bekannter Datensequenzen jeweils eine Netzwerkadresse bezeichnet.

14. Verfahren zur Ermittlung einer kodierten Datensequenz als eine ermittelte Datensequenz, wobei die kodierte Datensequenz durch ein gemäß einer Modulationsvorschrift frequenzmoduliertes Eingangssignal kodiert ist, wobei die kodierte Datensequenz eine Mehrzahl von Datenelementen umfasst, und wobei das Verfahren umfasst:

Filtern des frequenzmodulierten Eingangssignals, um ein erstes frequenzgefiltertes Kanalsignal und ein zweites frequenzgefiltertes Kanalsignal zu erhalten,
das Verfahren dadurch charakterisiert, dass es weiterhin umfasst: für jede bekannte Datensequenz einer Menge bekannter Datensequenzen Zuordnen von zwei kanalspezifischen Signal-Rauschabstandswerten zu dieser bekannten Datensequenz,
wobei für jede bekannte Datensequenz der Menge bekannter Datensequenzen ein erster der zwei kanalspezifischen Signal-Rauschabstandswerte, die dieser Datensequenz zugeordnet sind, basierend auf dieser bekannten Datensequenz und basierend auf dem ersten frequenzgefilterten Kanalsignal als ein erster kanalspezifischer Signal-Rauschabstandswert dieser bekannten Datensequenz bestimmt wird,
wobei für jede bekannte Datensequenz der Menge bekannter Datensequenzen ein zweiter der zwei kanalspezifischen Signal-Rauschabstandswerte, die dieser Datensequenz zugeordnet sind, basierend auf dieser bekannten Datensequenz und basierend auf dem zweiten frequenzgefilterten Kanalsignal als ein zweiter kanalspezifischer Signal-Rauschabstandswert dieser bekannten Datensequenz bestimmt wird, und
wobei eine bekannte Datensequenz aus der Menge der bekannten Datensequenzen als die ermittelte Datensequenz ausgewählt wird, der ein kanalspezifischer Signal-Rauschabstandswert zugeordnet ist, der größer ist als ein anderer kanalspezifischer Signal-Rauschabstandswert, der einer anderen der bekannten Datensequenzen zugeordnet ist.

15. Computerprogramm zur Durchführung des Verfahrens nach Anspruch 14, wenn das Computerprogramm auf einem Computer oder Signalprozessor ausgeführt wird.

## Claims

1. A device for determining an encoded data sequence as a determined data sequence, the encoded data sequence being encoded by an input signal frequency-modulated in accordance with a modulation rule, the encoded data sequence comprising a plurality of data elements, comprising:

a filter unit (110) for filtering the frequency-modulated input signal in order to obtain a first frequency-filtered channel signal and a second frequency-filtered channel signal,
the device being **characterized in that** the same further comprises:

an evaluation unit (120) configured to associate, for each known data sequence of a quantity of known data sequences, two channel-specific signal-to-noise distance values to this known data sequence,
wherein the evaluation unit (120) is configured to determine, for each known data sequence of the quantity of known data sequences, a first one of the two channel-specific signal-to-noise distance values associated to this data sequence as a first channel-specific signal-to-noise distance value of this known data sequence based on this known data sequence and based on the first frequency-filtered channel signal,
wherein the evaluation unit (120) is configured to determine, for each known data sequence of the quantity of known data sequences, a second one of the two channel-specific signal-to-noise distance values associated to this data sequence as a second channel-specific signal-to-noise distance value of this known data sequence based on this known data sequence and based on the second frequency-filtered channel signal, and
wherein the evaluation unit (120) is configured to select from the quantity of known data sequences a known data sequence as the determined data sequence to which is associated a channel-specific signal-to-noise distance value which is greater than another channel-specific signal-to-noise distance value associated to another one of the known data sequences.

2. The device in accordance with claim 1, wherein the evaluation unit (120) is configured to select one of the known data sequences as the determined data sequence to which is associated a channel-specific signal-to-noise distance value which is greater than any other channel-specific signal-to-noise distance value associated to another one of the known data sequences of the quantity of known data sequences.

3. The device in accordance with claim 1 or 2,
wherein the filter unit (110) for filtering the frequency-modulated input signal is configured to obtain the first frequency-filtered channel signal with a first center frequency and the second frequency-filtered channel signal with a second center frequency,
wherein the filter unit (110) is implemented such that a frequency portion of the first center frequency in the second frequency-filtered channel signal is zero or smaller than a frequency portion of the first center frequency in the first frequency-modulated channel signal, and
wherein the filter unit (110) is implemented such that a frequency portion of the second center frequency in the first frequency-filtered channel signal is zero or smaller than a frequency portion of the second center frequency in the second frequency-modulated channel signal.

4. The device in accordance with any of claims 1 to 3,
wherein the evaluation unit (120) is configured to determine, for each of the known data sequences of the quantity of known data sequences, a quantity of channel-specific signal-to-noise distance values of this known data sequence each, the quantity of channel-specific signal-to-noise distance values of this data sequence comprising the first channel-specific signal-to-noise distance value of this known data sequence and the second channel-specific signal-to-noise distance value of this known data sequence,
wherein the evaluation unit (120) is configured to select, for each of the known data sequences of the quantity of known data sequences, from the quantity of channel-specific signal-to-noise distance values of this known data sequence a greatest channel-specific signal-to-noise distance value as a data sequence signal-to-noise distance value of this known data sequence such that no other one of the channel-specific signal-to-noise distance values from the quantity of channel-specific signal-to-noise distance values of this known data sequence is greater, and
wherein the evaluation unit (120) is additionally configured to select from the quantity of known data sequences that known data sequence as the determined data sequence such that there is no other known data sequence from the quantity of known data sequences the data sequence signal-to-noise distance value of which is greater than the data sequence signal-to-noise distance value of the determined data sequence.

5. The device in accordance with any of the preceding claims,
wherein the evaluation unit (120) is configured to determine, for each of the known data sequences, a first signal power value of this known data sequence in dependence on this known data sequence and on the first frequency-filtered channel signal,
wherein the evaluation unit (120) is configured to determine, for each of the known data sequences, the first channel-specific signal-to-noise distance value of this known data sequence in dependence on the first signal power value of this known data sequence,
wherein the evaluation unit (120) is configured to determine, for each of the known data sequences, a second signal power value of this known data sequence in dependence on this known data sequence and on the second frequency-filtered channel signal, and
wherein the evaluation unit (120) is configured to determine, for each of the known data sequences, the second channel-specific signal-to-noise distance value of this known data sequence in dependence on the second signal power value of this known data sequence.

6. The device in accordance with claim 5,
wherein the evaluation unit (120) is configured to determine, for each of the known data sequences, a first noise power value of this known data sequence in dependence on this known data sequence and on the first frequency-filtered channel signal,
wherein the evaluation unit (120) is configured to determine, for each of the known data sequences, the first channel-specific signal-to-noise distance value of this known data sequence in dependence on the first signal power value of this known data sequence and the first noise power value of this known data sequence such that the first channel-specific signal-to-noise distance value of this known data sequence indicates a size ratio of the first signal power value of this known data sequence relative to the first noise power value of this known data sequence,
wherein the evaluation unit (120) is configured to determine, for each of the known data sequences, a second noise power value of this known data sequence in dependence on this known data sequence and on the second frequency-filtered channel signal, and
wherein the evaluation unit (120) is configured to determine, for each of the known data sequences, the second channel-specific signal-to-noise distance value of this known data sequence in dependence on the second signal power value of this known data sequence and the second noise power value of this known data sequence such that the second channel-specific signal-to-noise distance value of this known data sequence indicates a size ratio of the second signal power value of this known data sequence relative to the second noise power value of this known data sequence.

7. The device in accordance with claim 6,
wherein the evaluation unit (120) is configured to calculate, for each of the known data sequences, the first channel-specific signal-to-noise distance value of this known data sequence by calculating:

$$\frac{\mu_{SN0} - \mu_{N0}}{\mu_{N0}}$$

or by calculating:

$$\frac{\mu_{SN0}}{\mu_{N0}}$$

wherein $\mu_{SN0}$ refers to the first signal power value of this known data sequence, and
wherein $\mu_{N0}$ refers to the first noise power value of this known data sequence.

8. The device in accordance with any of the preceding claims,
wherein the filter unit (110) for filtering the frequency-modulated input signal is configured to obtain the first frequency-filtered channel signal, the second frequency-filtered channel signal and a third frequency-filtered channel signal,
wherein the evaluation unit (120) is configured to associate, for each known data sequence of a quantity of known data sequences, three channel-specific signal-to-noise distance values to this known data sequence,
wherein the evaluation unit (120) is configured to determine, for each known data sequence of a quantity of known data sequences, a third one of the three channel-specific signal-to-noise distance values associated to this data sequence as a third channel-specific signal-to-noise distance value of this known data sequence based on this known data sequence and based on the third frequency-filtered channel signal, and
wherein the evaluation unit (120) is configured to select from the quantity of known data sequences the known data sequence as the determined data sequence to which is associated a channel-specific signal-to-noise distance value which is greater than another channel-specific signal-to-noise distance value associated to another one of the known data sequences.

9. The device in accordance with any of claims 1 to 7,
wherein the filter unit (110) for filtering the frequency-modulated input signal is configured to obtain the first frequency-filtered channel signal, the second frequency-filtered channel signal, a third frequency-filtered channel signal, and a fourth frequency-filtered channel signal,
wherein the evaluation unit (120) is configured to associate, for each known data sequence of a quantity of known data sequences, four channel-specific signal-to-noise distance values to this known data sequence,
wherein the evaluation unit (120) is configured to determine, for each known data sequence of a quantity of known data sequences, a third one of the four channel-specific signal-to-noise distance values associated to this data sequence as a third channel-specific signal-to-noise distance value of this known data sequence based on this known data sequence and based on the third frequency-filtered channel signal,
wherein the evaluation unit (120) is configured to determine, for each known data sequence of a quantity of known data sequences, a fourth one of the four channel-specific signal-to-noise distance values associated to this data sequence as a fourth channel-specific signal-to-noise distance value of this known data sequence based on this known data sequence and based on the fourth frequency-filtered channel signal, and
wherein the evaluation unit (120) is configured to select from the quantity of known data sequences the known data sequence as the determined data sequence to which is associated a channel-specific signal-to-noise distance value which is greater than another channel-specific signal-to-noise distance value associated to another one of the known data sequences.

10. The device in accordance with any of the preceding claims, the device being configured to determine an encoded data sequence encoded by the frequency-modulated input signal which is frequency-modulated by the modulation rule, the modulation rule being frequency-shift keying.

11. The device in accordance with any of the preceding claims,
    wherein the evaluation unit (120) comprises a first squaring unit (232) for squaring the first frequency-filtered channel signal in order to obtain a first squared channel signal,
    wherein the evaluation unit (120) comprises a second squaring unit (234) for squaring the second frequency-filtered channel signal in order to obtain a second squared channel signal,
    wherein the evaluation unit (120) additionally comprises a storage unit (241) for storing the quantity of known data sequences,
    wherein the evaluation unit (120) additionally comprises a first signal-to-noise distance determining unit (242) in order to obtain, for each known data sequence of the quantity of known data sequences, the first channel-specific signal-to-noise distance value of this data sequence based on this known data sequence and the first squared channel signal,
    wherein the evaluation unit (120) additionally comprises a second signal-to-noise distance determining unit (244) in order to obtain, for each known data sequence of the quantity of known data sequences, the second channel-specific signal-to-noise distance value of this data sequence based on this known data sequence and the second squared channel signal,
    wherein the evaluation unit (120) additionally comprises an argmax unit (252) for determining a maximum signal-to-noise distance value, and
    wherein the evaluation unit (120) additionally comprises a data sequence determining unit (262) in order to select that known data sequence of the quantity of known data sequences as the determined data sequence to which is associated the maximum signal-to-noise distance value.

12. The device in accordance with any of the preceding claims,
    wherein the device additionally comprises a channel estimate output unit (610), wherein the channel estimate output unit (610) is configured to output the first channel-specific signal-to-noise distance value of the determined data sequence as a first channel estimate of a first channel, and
    wherein the channel estimate output unit (610) is configured to output the second channel-specific signal-to-noise distance value of the determined data sequence as a second channel estimate of a second channel.

13. A device for recognizing a network address encoded by a frequency-modulated input signal, comprising:

    an interface unit (510) for receiving the frequency-modulated input signal, and
    a device (520) in accordance with any of the preceding claims for determining a data sequence encoded by the frequency-modulated input signal which comprises a plurality of data elements, the encoded data sequence designating a network address,
    wherein the evaluation unit (525) of the device (520) in accordance with any of the preceding claims is configured to determine a data sequence signal-to-noise distance value for each known data sequence of a quantity of known data sequences, wherein each known data sequence of the quantity of known data sequences designates a network address each.

14. A method for determining an encoded data sequence as a determined data sequence, the encoded data sequence being encoded by an input signal frequency-modulated in accordance with a modulation rule, the encoded data sequence comprising a plurality of data elements, comprising:

    filtering the frequency-modulated input signal in order to obtain a first frequency-filtered channel signal and a second frequency-filtered channel signal,
    the method being **characterized in that** the same further comprises:

    for each known data sequence of a quantity of known data sequences, associating two channel-specific signal-to-noise distance values to this known data sequence,
    wherein, for each known data sequence of the quantity of known data sequences, a first one of the two channel-specific signal-to-noise distance values associated to this data sequence is determined as a first channel-specific signal-to-noise distance value of this known data sequence based on this known data sequence and based on the first frequency-filtered channel signal,
    wherein, for each known data sequence of the quantity of known data sequences, a second one of the two channel-specific signal-to-noise distance values associated to this data sequence is determined as a second channel-specific signal-to-noise distance value of this known data sequence based on this known data sequence and based on the second frequency-filtered channel signal, and
wherein from the quantity of known data sequences a known data sequence is selected as the determined data sequence to which is associated a channel-specific signal-to-noise distance value which is greater than another channel-specific signal-to-noise distance value associated to another one of the known data sequences.

15. A computer program for performing the method in accordance with claim 14 when the computer program is executed on a computer or signal processor.

## Revendications

1. Dispositif pour la détection d'une séquence de données codée comme séquence de données détectée, dans lequel la séquence de données codée est codée par un signal d'entrée modulé en fréquence selon une prescription de modulation, la séquence de données codée comportant une pluralité d'éléments de données, et dans lequel le dispositif comporte:

   une unité de filtre (110) destinée à filtrer le signal d'entrée modulé en fréquence, pour obtenir un premier signal de canal filtré en fréquence et un deuxième signal de canal filtré en fréquence,
   le dispositif étant **caractérisé par le fait qu'**il comporte par ailleurs:

   une unité d'évaluation (120) qui est réalisée pour associer, pour chaque séquence de données connue d'un grand nombre de séquences de données connues, deux valeurs de rapport signal-bruit spécifique au canal de cette séquence de données connue,
   dans lequel l'unité d'évaluation (120) est réalisée pour déterminer, pour chaque séquence de données connue du grand nombre de séquences de données connues, une première des deux valeurs de rapport signal-bruit spécifique au canal associées à cette séquence de données sur base de cette séquence de données connue et sur base du premier signal de canal filtré en fréquence comme première valeur de rapport signal-bruit spécifique au canal de cette séquence de données connue,
   dans lequel l'unité d'évaluation (120) est réalisée pour déterminer, pour chaque séquence de données connue du grand nombre de séquences de données connues, une deuxième des deux valeurs de rapport signal-bruit spécifiques au canal associées à cette séquence de données sur base de cette séquence de données connue et sur base du deuxième signal de canal filtré en fréquence comme deuxième valeur de rapport signal-bruit spécifique au canal de cette séquence de données connue, et
   dans lequel l'unité d'évaluation (120) est réalisée pour sélectionner, comme séquence de données déterminée, une séquence de données connue du grand nombre de séquences de données connues à laquelle est associée une valeur de rapport signal-bruit spécifique au canal qui est supérieure à une autre valeur de rapport signal-bruit spécifique au canal associée à une autre des séquences de données connues.

2. Dispositif selon la revendication 1, dans lequel l'unité d'évaluation (120) est réalisée pour sélectionner, comme séquence de données déterminée, une des séquences de données connues à laquelle est associée une valeur de rapport signal-bruit spécifique au canal qui est supérieure à toute autre valeur de rapport signal-bruit spécifique au canal associée à une autre des séquences de données connues du grand nombre de séquences de données connues.

3. Dispositif selon la revendication 1 ou 2,
   dans lequel l'unité de filtre (110) est conçue pour filtrer le signal d'entrée modulé en fréquence, pour obtenir le premier signal de canal filtré en fréquence avec une première fréquence centrale et le deuxième signal de canal filtré en fréquence avec une deuxième fréquence centrale,
   dans lequel l'unité de filtre (110) est conçue de sorte qu'une part de fréquence de la première fréquence centrale dans le deuxième signal de canal filtré en fréquence soit nulle ou inférieure à une part de fréquence de la première fréquence centrale dans le premier signal de canal modulé en fréquence, et
   dans lequel l'unité de filtre (110) est conçue de sorte qu'une part de fréquence de la deuxième fréquence centrale dans le premier signal de canal filtré en fréquence soit nulle ou inférieure à une part de fréquence de la deuxième fréquence centrale dans le deuxième signal de canal modulé en fréquence.

4. Dispositif selon l'une des revendications 1 à 3,
   dans lequel l'unité d'évaluation (120) est conçue pour déterminer, pour chacune des séquences de données connues du grand nombre de séquences de données connues, chaque fois un grand nombre de valeurs de rapport signal-bruit spécifique au canal de cette séquence de données connue, le grand nombre de valeurs de rapport signal-bruit spécifique au canal de cette séquence de données comprenant la première valeur de rapport signal-bruit spécifique au canal de cette séquence de données connue et la deuxième valeur de rapport signal-bruit spécifique au canal de cette séquence de données connue,

dans lequel l'unité d'évaluation (120) est conçue pour sélectionner, pour chacune des séquences de données connues du grand nombre de séquences de données connues, parmi le grand nombre des valeurs de rapport signal-bruit spécifique au canal de cette séquence de données connue, une valeur de rapport de signal-bruit spécifique au canal la plus grande comme valeur de rapport signal-bruit de séquence de données de cette séquence de données connue, de sorte qu'aucune autre des valeurs de rapport signal-bruit spécifique au canal du grand nombre de valeurs de rapport signal-bruit de cette séquence de données connue ne soit supérieure, et

dans lequel l'unité d'évaluation (120) est par ailleurs conçue pour sélectionner la séquence de données connue comme séquence de données détectée parmi le grand nombre de séquences de données connues, de sorte qu'il n'y ait pas d'autre séquence de données connue parmi le grand nombre de séquences de données connues dont la valeur de rapport signal-bruit de séquence de données est supérieure à la valeur de rapport signal-bruit de séquence de données de la séquence de données détectée.

**5.** Dispositif selon l'une des revendications précédentes,
dans lequel l'unité d'évaluation (120) est conçue pour déterminer, pour chacune des séquences de données connues, une première valeur de puissance de signal de cette séquence de données connue en fonction de cette séquence de données connue et du premier signal de canal filtré en fréquence,
dans lequel l'unité d'évaluation (120) est conçue pour déterminer, pour chacune des séquences de données connues, la première valeur de rapport signal-bruit spécifique au canal de cette séquence de données connue en fonction de la première valeur de puissance de signal de cette séquence de données connue,
dans lequel l'unité d'évaluation (120) est conçue pour déterminer, pour chacune des séquences de données connues, une deuxième valeur de puissance de signal de cette séquence de données connue en fonction de cette séquence de données connue et du deuxième signal de canal filtré en fréquence, et
dans lequel l'unité d'évaluation (120) est conçue pour déterminer, pour chacune des séquences de données connues, la deuxième valeur de rapport signal-bruit spécifique au canal de cette séquence de données connue en fonction de la deuxième valeur de puissance de signal de cette séquence de données connue.

**6.** Appareil selon la revendication 5,
dans lequel l'unité d'évaluation (120) est conçue pour déterminer, pour chacune des séquences de données connues, une première valeur de puissance de bruit de cette séquence de données connue en fonction de cette séquence de données connue et du premier signal de canal filtré en fréquence,
dans lequel l'unité d'évaluation (120) est conçue pour déterminer, pour chacune des séquences de données connues, la première valeur de rapport signal-bruit spécifique au canal de cette séquence de données connue en fonction de la première valeur de puissance de signal de cette séquence de données connue et de la première valeur de puissance de bruit de cette séquence de données connue, de sorte que la première valeur de rapport signal-bruit spécifique au canal de cette séquence de données connue indique un rapport de grandeurs entre la première valeur de puissance de signal de cette séquence de données connue et la première valeur de puissance de bruit de cette séquence de données connue,
dans lequel l'unité d'évaluation (120) est conçue pour déterminer, pour chacune des séquences de données connues, une deuxième valeur de puissance de bruit de cette séquence de données connue en fonction de cette séquence de données connue et du deuxième signal de canal filtré en fréquence, et
dans lequel l'unité d'évaluation (120) est conçue pour déterminer, pour chacune des séquences de données connues, la deuxième valeur de rapport signal-bruit spécifique au canal de cette séquence de données connue en fonction de la deuxième valeur de puissance de signal de cette séquence de données connue et de la deuxième valeur de puissance de bruit de cette séquence de données connue, de sorte que la deuxième valeur de rapport signal-bruit spécifique au canal de cette séquence de données connue indique un rapport de grandeurs entre la deuxième valeur de puissance de signal de cette séquence de données connue et la deuxième valeur de puissance de bruit de cette séquence de données connue.

**7.** Dispositif selon la revendication 6,
dans lequel l'unité d'évaluation (120) est conçue pour calculer, pour chacune des séquences de données connues, la première valeur de rapport signal-bruit spécifique au canal de cette séquence de données connue en calculant

$$\frac{\mu_{SN0} - \mu_{N0}}{\mu_{N0}}$$

ou en calculant

$$\frac{\mu_{SN0}}{\mu_{N0}},$$

où $\mu_{SN0}$ désigne la première valeur de puissance de signal de cette séquence de données connue, et
où $\mu_{N0}$ désigne la première valeur de puissance de bruit de cette séquence de données connue.

8. Dispositif selon l'une des revendications précédentes,
dans lequel l'unité de filtre (110) est réalisée pour filtrer le signal d'entrée modulé en fréquence pour obtenir le premier signal de canal filtré en fréquence, le deuxième signal de canal filtré en fréquence et un troisième signal de canal filtré en fréquence,
dans lequel l'unité d'évaluation (120) est réalisée pour associer, pour chaque séquence de données connue d'un grand nombre de séquences de données connues, trois valeurs de rapport signal-bruit spécifique au canal de cette séquence de données connues,
dans lequel l'unité d'évaluation (120) est réalisée pour déterminer, pour chaque séquence de données connue d'un grand nombre de séquences de données connues, une troisième des trois valeurs de rapport signal-bruit spécifique au canal associées à cette séquence de données sur base de cette séquence de données connue et sur base du troisième signal de canal filtré en fréquence comme troisième valeur de rapport signal-bruit spécifique au canal de cette séquence de données connue, et
dans lequel l'unité d'évaluation (120) est réalisée pour sélectionner, comme séquence de données déterminée, la séquence de données connue parmi le grand nombre de séquences de données connues à laquelle est associée une valeur de rapport signal-bruit spécifique au canal qui est supérieure à une autre valeur de rapport signal-bruit spécifique au canal associée à une autre des séquences de données connues.

9. Dispositif selon l'une des revendications 1 à 7,
dans lequel l'unité de filtre (110) est réalisée pour filtrer le signal d'entrée modulé en fréquence pour obtenir le premier signal de canal filtré en fréquence, le deuxième signal de canal filtré en fréquence, un troisième signal de canal filtré en fréquence et un quatrième signal de canal filtré en fréquence,
dans lequel l'unité d'évaluation (120) est réalisée pour associer, pour chaque séquence de données connue d'un grand nombre de séquences de données connues, quatre valeurs de rapport signal-bruit spécifique au canal pour à cette séquence de données connue,
dans lequel l'unité d'évaluation (120) est réalisée pour déterminer, pour chaque séquence de données connue d'un grand nombre de séquences de données connues, une troisième des quatre valeurs de rapport signal-bruit spécifique au canal associées à cette séquence de données sur base de cette séquence de données connue et sur base du troisième signal de canal filtré en fréquence comme troisième valeur de rapport signal-bruit spécifique au canal de cette séquence de données connue,
dans lequel l'unité d'évaluation (120) est réalisée pour déterminer, pour chaque séquence de données connue d'un grand nombre de séquences de données connues, une quatrième des quatre valeurs de rapport signal-bruit spécifique au canal associées à cette séquence de données sur base de cette séquence de données connue et sur base du quatrième signal de canal filtré en fréquence comme quatrième valeur de rapport signal-bruit spécifique au canal de cette séquence de données connue, et dans lequel l'unité d'évaluation (120) est réalisée pour sélectionner, comme séquence de données déterminée, la séquence de données connue parmi le grand nombre de séquences de données connues à laquelle est associée une valeur de rapport signal-bruit spécifique au canal qui est supérieure à une autre valeur de rapport signal-bruit spécifique au canal associée à une autre des séquences de données connues.

10. Dispositif selon l'une des revendications précédentes, dans lequel l'appareil est conçu pour déterminer une séquence de données codée qui est codée par le signal d'entrée modulé en fréquence modulé en fréquence par la prescription de modulation, la prescription de modulation étant une modulation par déplacement de fréquence.

**11.** Dispositif selon l'une des revendications précédentes,
dans lequel l'unité d'évaluation (120) présente une première unité d'élévation au carré (232) destinée à élever au carré le premier signal de canal filtré en fréquence pour obtenir un premier signal de canal élevé au carré,
dans lequel l'unité d'évaluation (120) présente une deuxième unité d'élévation au carré (234) destinée à élever au carré le deuxième signal de canal filtré en fréquence pour obtenir un deuxième signal de canal élevé au carré,
dans lequel l'unité d'évaluation (120) présente par ailleurs une unité de mémoire (241) destinée à mémoriser le grand nombre de séquences de données connues,
dans lequel l'unité d'évaluation (120) présente par ailleurs une première unité de détermination de rapport signal-bruit (242) pour obtenir, pour chaque séquence de données connue du grand nombre de séquences de données connues, la première valeur de rapport signal-bruit spécifique au canal de cette séquence de données sur base de la séquence de données connue et du premier signal de canal élevé au carré,
dans lequel l'unité d'évaluation (120) présente par ailleurs une deuxième unité de détermination de rapport signal-bruit (244) pour obtenir, pour chaque séquence de données connue du grand nombre de séquences de données connues, la deuxième valeur de rapport signal-bruit spécifique au canal de cette séquence de données sur base de cette séquence de données connue et du deuxième signal de canal élevé au carré,
dans lequel l'unité d'évaluation (120) présente par ailleurs une unité argmax (252) destinée à déterminer une valeur de rapport signal-bruit maximale, et
dans lequel l'unité d'évaluation (120) présente par ailleurs une unité de détermination de séquence de données (262) destinée à sélectionner, comme séquence de données déterminée, la séquence de données connue du grand nombre de séquences de données connues à laquelle est associée la valeur de rapport signal-bruit maximale.

**12.** Dispositif selon l'une des revendications précédentes,
dans lequel le dispositif présente par ailleurs une unité de sortie d'estimation de canal (610),
dans lequel l'unité de sortie d'estimation de canal (610) est réalisée pour sortir la première valeur de rapport signal-bruit spécifique au canal de la séquence de données détectée comme première estimation de canal d'un premier canal, et
dans lequel l'unité de sortie d'estimation de canal (610) est réalisée pour sortir la deuxième valeur de rapport signal-bruit spécifique au canal de la séquence de données détectée comme deuxième estimation de canal d'un deuxième canal.

**13.** Dispositif pour reconnaître une adresse de réseau qui est codée par un signal d'entrée modulé en fréquence, comportant:

une unité d'interface (510) destinée à recevoir le signal d'entrée modulé en fréquence, et
un dispositif (520) selon l'une des revendications précédentes destiné à détecter une séquence de données codée par le signal d'entrée modulé en fréquence comprenant une pluralité d'éléments de données, la séquence de données codée désignant une adresse de réseau,
dans lequel l'unité d'évaluation (525) du dispositif (520) selon l'une des revendications précédentes est aménagée pour déterminer une valeur de rapport signal-bruit de séquence de données pour chaque séquence de données connue d'un grand nombre de séquences de données connues, chaque séquence de données connue du grand nombre de séquences de données connues désignant chaque fois une adresse de réseau.

**14.** Procédé pour la détection d'une séquence de données codée comme séquence de données détectée, dans lequel la séquence de données codée est codée par un signal d'entrée modulé en fréquence selon une prescription de modulation, la séquence de données codée comportant une pluralité d'éléments de données, et dans lequel le procédé comprend le fait de:

filtrer le signal d'entrée modulé en fréquence, pour obtenir un premier signal de canal filtré en fréquence et un deuxième signal de canal filtré en fréquence,
le procédé étant **caractérisé par le fait qu'**il comporte par ailleurs le fait de:

pour chaque séquence de données connue d'un grand nombre de séquences de données connues, associer deux valeurs de rapport signal-bruit spécifique au canal de cette séquence de données connue,
dans lequel est déterminée, pour chaque séquence de données connue du grand nombre de séquences de données connues, une première des deux valeurs de rapport signal-bruit spécifique au canal associées à cette séquence de données sur base de cette séquence de données connue et sur base du premier signal de canal filtré en fréquence comme première valeur de rapport signal-bruit spécifique au canal de cette séquence de données connue,

dans lequel est déterminée, pour chaque séquence de données connue du grand nombre de séquences de données connues, une deuxième des deux valeurs de rapport signal-bruit spécifique au canal associées à cette séquence de données sur base de cette séquence de données connue et sur base du deuxième signal de canal filtré en fréquence comme deuxième valeur de rapport signal-bruit spécifique au canal de cette séquence de données connue, et

dans lequel est sélectionnée, comme séquence de données déterminée, une séquence de données connue parmi le grand nombre de séquences de données connues associée à une valeur de rapport signal-bruit spécifique au canal qui est supérieure à une autre valeur de rapport signal-bruit spécifique au canal associée à une autre des séquences de données connues.

15. Programme d'ordinateur pour réaliser le procédé selon la revendication 14 lorsque le programme d'ordinateur est exécuté sur un ordinateur ou processeur de signal.

FIG 1

EP 2 926 515 B1

FIG 2

FIG 3

Sequenz

Kanal $f_1$

Kanal $f_0$

Periode

$T_b$

1   0   1   1

1   2   3   4

EP 2 926 515 B1

FIG 4

EP 2 926 515 B1

510

520

frequenzmoduliertes
Eingangssignal

→

Schnittstelleneinheit

frequenzmoduliertes
Eingangssignal

→

Vorrichtung
zur Ermittlung
einer kodierten
Datensequenz

Auswerteeinheit

525

ermittelte
Datensequenz,
die Netzwerkadresse
bezeichnet

→

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5701332 A

**In der Beschreibung aufgeführte Nicht-Patentliteratur**

- **F. XIONG.** Digital Modulation Techniques. Artech House, Inc, 2006

- Spread Frequency Shift Keying. **T. SCHAUB.** IEEE Transactions on Communications. Februar 1994, 1056-1064